# EUROPEAN PATENT SPECIFICATION

(11) **EP 3 242 273 B1**
(45) Date of publication and mention of the grant of the patent: **12.05.2021**
(21) Application number: 16196880.5
(22) Date of filing: 02.11.2016
(51) Int. Cl.: G06T 15/00

(54) **SYSTEMS AND METHODS FOR PRESENTING CONTENT**
SYSTEME UND VERFAHREN ZUR DARSTELLUNG VON INHALT
SYSTÈMES ET PROCÉDÉS DE PRÉSENTATION DE CONTENU

(30) Priority: 02.05.2016 US 201615144695; 03.05.2016 WO PCT/US2016/030592
(43) Date of publication of application: 08.11.2017
(73) Proprietor: Facebook, Inc., Menlo Park, CA 94025 (US)
(72) Inventor: WARREN, Cliff, Menlo Park, CA California 94025 (US); SUTTON, Charles Matthew, Menlo Park, CA California 94025 (US); GUPTA, Chetan Parag, Menlo Park, CA California 94025 (US); HSU, Joyce, Menlo Park, CA California 94025 (US); HU, Anning, Menlo Park, CA California 94025 (US); ZENG, Zeyu, Menlo Park, CA California 94025 (US)
(74) Representative: Murgitroyd & Company

(56) References cited:
- WO-A2-2013/024364
- US-A1- 2009 100 351
- XIANG LI ET AL: "An efficient approach to building image-based road network model", ANNALS OF GIS, vol. 19, no. 4, 1 December 2013 (2013-12-01), pages 209-217, XP055394750, ISSN: 1947-5683, DOI: 10.1080/19475683.2013.812144
- 4865343D: "Field of View in video games", Wikipedia , 2 August 2012 (2012-08-02), Retrieved from the Internet: URL:https://en.wikipedia.org/w/index.php?t itle=Field_of_view_in_video_games&oldid=50 5369641 [retrieved on 2019-12-17]

## Description

### FIELD OF THE INVENTION

The present technology relates to the field of content presentation. More particularly, the present technology relates to techniques for presenting content items through computing devices.

### BACKGROUND

Today, people often utilize computing devices (or systems) for a wide variety of purposes. Users can operate their computing devices to, for example, interact with one another, create content, share content, and access information. Under conventional approaches, content items (e.g., images, videos, audio files, etc.) can be made available through a content sharing platform. Users can operate their computing devices to access the content items through the platform. Typically, the content items can be provided, or uploaded, by various entities including, for example, content publishers and also users of the content sharing platform. In some instances, the content items can be categorized and/or curated
WO2013/024364 discloses systems and methods for presenting a virtual simulation of physical events on a display screen, in particular the simulation of a driving vehicle along a path.

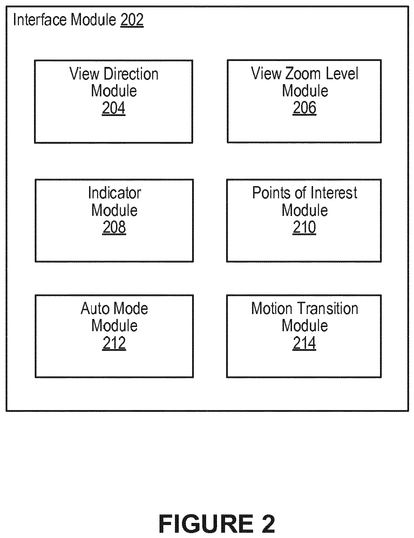

4865343D: "Field of View in video games",Wikipedia, 2 August 2012 (2012-08-02),Retrieved from the Internet:URL:https://en.wikipedia.org/w/index.php? title=Field_of_view_in_video_games&oldid=505369641 [retrieved on 2019-12-17]
is a Wikipedia page about Field of View (FOV) in video games and discloses in figure 2 an FOV indicator for use in video games presenting points of interests that are within the viewport.

### SUMMARY

The scope of the invention is defined by the attached claims.

### BRIEF DESCRIPTION OF THE DRAWINGS

- **FIGURE 1**: illustrates an example system including an example content presentation module, according to an embodiment of the present disclosure.
- **FIGURE 2**: illustrates an example of an interface module, according to an embodiment of the present disclosure.
- **FIGURE 3**: illustrates an example of a content director module, according to an embodiment of the present disclosure.
- **FIGURE 4A-C**: illustrate examples of a viewport interface in which a navigation indicator is provided while a content item is being accessed, according to an embodiment of the present disclosure.
- **FIGURE 5**: illustrates an example of a publisher interface for customizing the user experience for a virtual content item, according to an embodiment of the present disclosure.
- **FIGURES 6A-F**: illustrate examples of a navigation indicator that can be presented in a viewport interface when a content item is being accessed, according to an embodiment of the present disclosure.
- **FIGURE 7**: illustrates an example method for navigating a viewport interface, according to an embodiment of the present disclosure
- **FIGURE 8**: illustrates a network diagram of an example system including an example social networking system that can be utilized in various scenarios, according to an embodiment of the present disclosure.
- **FIGURE 9**: illustrates an example of a computer system or computing device that can be utilized in various scenarios, according to an embodiment of the present disclosure.

The figures depict various embodiments of the disclosed technology for purposes of illustration only, wherein the figures use like reference numerals to identify like elements. One skilled in the art will readily recognize from the following discussion that alternative embodiments of the structures and methods illustrated in the figures can be employed without departing from the principles of the disclosed technology described herein.

### DETAILED DESCRIPTION

### APPROACHES FOR PRESENTING CONTENT

People use computing devices (or systems) for a wide variety of purposes. As mentioned, under conventional approaches, a user can utilize a computing device to share content items (e.g., documents, images, videos, audio, etc.) with other users. Under conventional approaches, content items (e.g., images, videos, audio files, etc.) can be made available through a content sharing platform. Users can operate their computing devices to access the content items through the platform. Typically, the content items can be provided, or uploaded, by various entities including, for example, content publishers and also users of the content sharing platform.

In some instances, a user can access virtual content, for example, through a display screen of their computing device, a virtual reality system, and/or a head mounted display. The virtual content may be composed using one or more videos and/or images that capture scenes such as geographic locations and/or activities being performed, for example. Such scenes may be captured from the real world and/or be computer generated. In some instances, the virtual content is composed so that the user is able to navigate within the scenes captured by the virtual content. Thus, by accessing the virtual content, the user is able experience and navigate the captured scenes virtually, for example, as if the user were physically present at a given location and/or physically performing an activity represented in the scenes.

The virtual content may be a spherical video that captures a 360 degree view of a scene, for example. The spherical video can be created by stitching together various video streams, or feeds, that were captured by cameras that are placed at different locations and/or positions to capture a 360 degree view of the scene. Once stitched together, a user can access, or playback, the spherical video to view a portion of the spherical video at some angle. Generally, while accessing the spherical video, the user can zoom and change the direction (e.g., pitch, yaw, roll) of the viewport to access another portion of the scene captured by the spherical video. Given the nature of virtual content, the user may have difficulty keeping track of changes made to the zoom level and/or the direction of the viewport. Such changes may deviate from the intended zoom level and/or viewport direction that may have been specified by a publisher of the virtual content. In some instances, while maneuvering the viewport direction, the user may miss a portion of the spherical video that includes one or more points of interest. For example, the user may change the direction of the viewport to look in one direction at a time when a point of interest would have been visible to the user had the viewport direction been facing an opposite direction. Missing such points of interest may degrade the overall user experience and may also negatively affect user engagement with virtual content. Accordingly, such conventional approaches may not be effective in addressing these and other problems arising in computer technology.

An improved approach rooted in computer technology overcomes the foregoing and other disadvantages associated with conventional approaches specifically arising in the realm of computer technology. In various embodiments, a navigation element or indicator can be provided in an interface, or viewport, through which virtual content is presented. The navigation indicator can automatically be updated as the user interacts with the virtual content to visually indicate i) a direction, or heading, of the viewport within the scenes captured by the virtual content and/or ii) a zoom level of the viewport. In various embodiments, the navigational indicator can also be configured to indicate respective directions, or headings, of points of interest that exist in the virtual content being accessed. The direction of a point of interest can be identified within the navigation indicator in relation to the direction of the viewport, for example. As a result, the user can easily determine when a point of interest is available for viewing as well as the relative direction of the point of interest. In some embodiments, the user can engage an auto mode that automatically guides the user's viewport to points of interest.

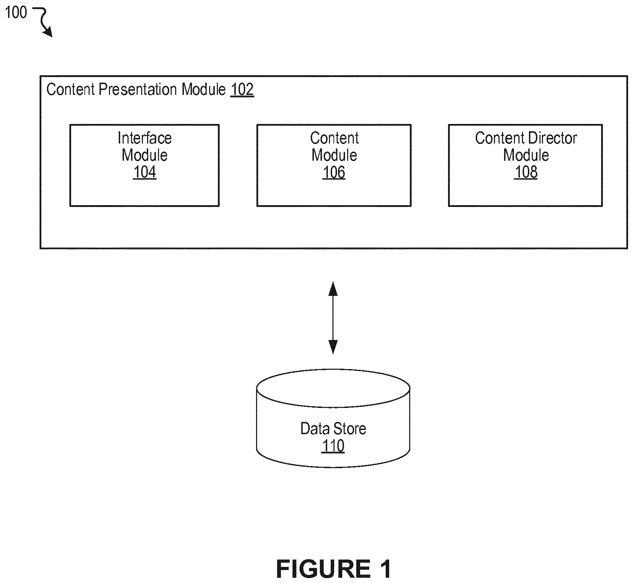

**FIGURE 1** illustrates an example system 100 including an example content presentation module 102 configured to provide content items to users, according to an embodiment of the present disclosure. As shown in the example of **FIGURE** 1, the content presentation module 102 can include an interface module 104, a content module 106, and a content director module 108. In some instances, the example system 100 can include at least one data store 110. The components (e.g., modules, elements, etc.) shown in this figure and all figures herein are exemplary only, and other implementations may include additional, fewer, integrated, or different components. Some components may not be shown so as not to obscure relevant details.

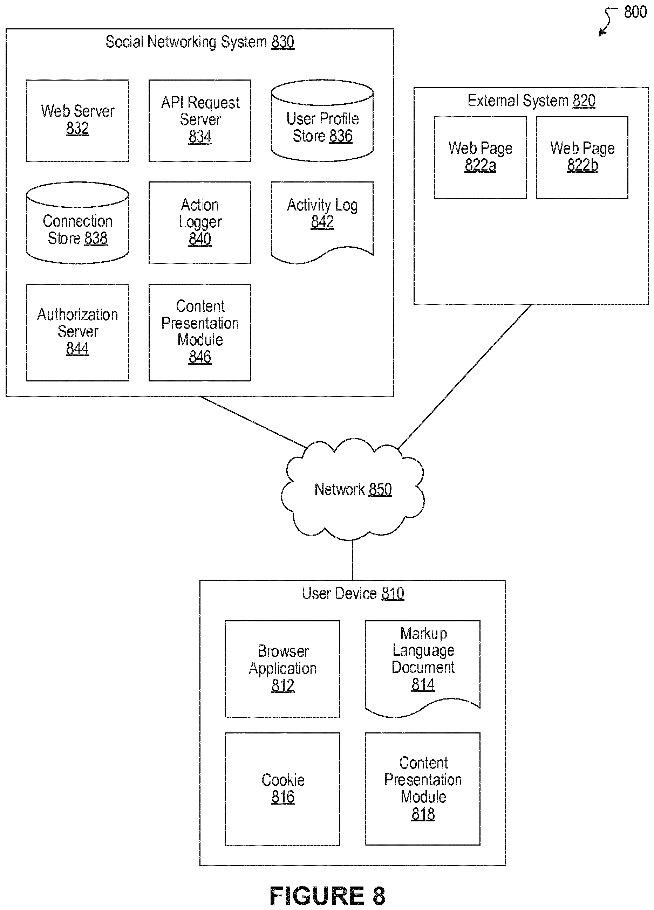

In some embodiments, the content presentation module 102 can be implemented, in part or in whole, as software, hardware, or any combination thereof. In general, a module, as discussed herein, can be associated with software, hardware, or any combination thereof. In some implementations, one or more functions, tasks, and/or operations of modules can be carried out or performed by software routines, software processes, hardware, and/or any combination thereof. In some cases, the content presentation module 102 can be implemented, in part or in whole, as software running on one or more computing devices or systems, such as on a user computing device or client computing system. For example, the content presentation module 102, or at least a portion thereof, can be implemented as or within an application (e.g., app), a program, or an applet, etc., running on a user computing device or a client computing system, such as the user device 810 of **FIGURE** 8. Further, the content presentation module 102, or at least a portion thereof, can be implemented using one or more computing devices or systems that include one or more servers, such as network servers or cloud servers. In some instances, the content presentation module 102 can, in part or in whole, be implemented within or configured to operate in conjunction with a social networking system (or service), such as the social networking system 830 of **FIGURE 8****.** It should be understood that there can be many variations or other possibilities.

In various embodiments, the content presentation module 102 can utilize the interface module 104 and the content module 106 to provide content items to users. The interface module 104 can be configured to provide a viewport (e.g., graphical user interface) through which content items can be presented (e.g., streamed). For example, the viewport can be provided through a software application running on a computing device that is being operated by a user and the viewport can be presented through a display screen of the computing device. The user can interact with the viewport, for example, through an input device or by performing actions, e.g., gestures (e.g., touch screen gestures, hand gestures, etc.) through the display screen. More details regarding the interface module 104 will be provided below in reference to **FIGURE 2****.**

The content module 106 can be configured to provide various types of content items that can be presented through the interface provided by the interface module 104. For example, the content items may be obtained from a social networking system (e.g., social networking system 830 of **FIGURE 8**) or some other content provider system. In various embodiments, the content module 106 can provide virtual content that may be composed using one or more videos and/or images that capture scenes (e.g., geographic locations and/or activities being performed). Such scenes may be captured from the real world and/or be computer generated. The virtual content may be any content that captures 360 degree views and/or any three-dimensional (3D) content. Further, the virtual content may include content that is any size greater than a viewport is capable of presenting at a given moment. In such instances, the viewport can present different portions of the content as the viewport position is changed. In one example, the virtual content may be created using generally known image stitching techniques including, for example, rectilinear stitching, spherical stitching, cubical stitching, to name some examples. In another example, the virtual content may be a spherical video that captures a 360 degree view of a scene such as a point of interest. Some other examples of virtual content can include videos composed using monoscopic 360 degree views, videos composed using stereoscopic 180 degree views, etc. The spherical video can be created by stitching together various video streams, or feeds, that were captured by cameras that are placed at different locations and/or positions to capture a 360 degree view of the scene. Such video streams may be pre-determined for various angles (e.g., 0 degree, 30 degrees, 60 degrees, etc.) of the spherical video. Once stitched together, a user can access, or playback, the spherical video to view a portion of the spherical video at some angle. The portion of the spherical video shown to the user can be determined based on the location and direction of the user's viewport in three-dimensional space.

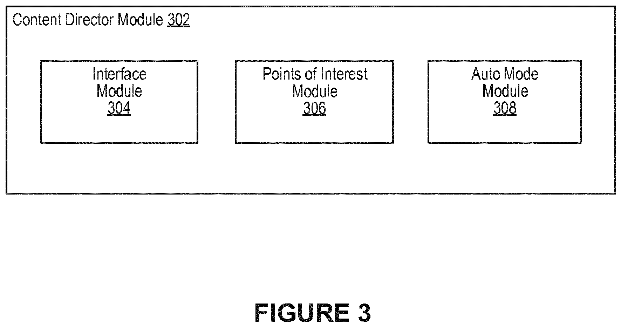

The content director module 108 can provide content publishers with access to various features that allow customization of the user experience when viewing a virtual content. More details regarding the content director module 108 will be provided below in reference to **FIGURE 3****.**

In some embodiments, the content presentation module 102 can be configured to communicate and/or operate with the at least one data store 110 in the example system 100. The at least one data store 110 can be configured to store and maintain various types of data. In various embodiments, the at least one data store 110 can store data relevant to function and operation of the content presentation module 102. One example of such data are virtual content items that are available for access through the interface provided by the interface module 104. In some implementations, the at least one data store 110 can store information associated with the social networking system (e.g., the social networking system 830 of **FIGURE 8**). The information associated with the social networking system can include data about users, social connections, social interactions, locations, geo-fenced areas, maps, places, events, pages, groups, posts, communications, content, feeds, account settings, privacy settings, a social graph, and various other types of data. In some implementations, the at least one data store 110 can store information associated with users, such as user identifiers, user information, profile information, user specified settings, content produced or posted by users, and various other types of user data. It should be appreciated that there can be many variations or other possibilities.

**FIGURE 2** illustrates an example of an interface module 202, according to an embodiment of the present disclosure. In some embodiments, the interface module 104 of **FIGURE 1** can be implemented with the interface module 202. As shown in the example of **FIGURE 2****,** the interface module 202 can include a view direction module 204, a view zoom level module 206, an indicator module 208, a points of interest module 210, an auto mode module 212, and a motion transition module 214.

As mentioned, the interface module 202 can be configured to provide a viewport (e.g., graphical user interface) through which content items (e.g., virtual content items) can be presented and accessed. In various embodiments, a user can access virtual content items that are provided through the content module 106 of **FIGURE** 1 using a computing device being operated by the user. The computing device may be any device that is capable of processing and presenting content including, for example, mobile phones, tablets, a virtual reality system, and/or a head mounted display. Once accessed, the interface module 202 can present the virtual content item through a display screen of the computing device.

When the virtual content item is initially accessed, the viewport associated with the computing device may display a certain portion of a scene of the virtual content item. The portion shown can be based on the position and/or direction (e.g., pitch, yaw, roll) of the viewport in relation to the scene. In some embodiments, the portion shown corresponds to a position and/or direction (e.g., pitch, yaw, roll) that was specified by a publisher of the virtual content item. In some embodiments, the user can view different portions of the scene by virtually navigating through the scene(s) captured by the virtual content item. For example, if the user is accessing the virtual content item using a mobile device, then the user can navigate the scene(s) in the virtual content item by changing the position and/or direction of the viewport, for example, based on touch screen gestures and/or based on the mobile device being physically moved in the desired position and/or direction.

Changes to the viewport position and/or direction may be determined in real-time by the view direction module 204 as the user interacts with the virtual content item. In another example, the user can also change the zoom level of the viewport while accessing a given scene. For example, the user may want to increase, or decrease, the zoom level of the viewport to view some portion of the scene. Such changes to the viewport zoom level can be determined in real-time by the view zoom level module 206. The user can make changes to the viewport (e.g., position, direction, zoom, etc.), for example, by performing touch gestures (e.g., swipe gestures, drag gestures, slide gestures, tap gestures, double tap gestures, pinch gestures, spread gestures, rotate gestures, flick gestures, etc.), hand gestures, and/or computing device gestures. Computing device gestures (e.g., tilt) can be determined using one or more sensors (e.g., gyroscopes, accelerometers, and/or inertial measurement units) in the computing device, for example. Further, if accessing the virtual content item through a virtual reality head mounted display, the user may change the direction of the viewport by changing the direction of the user's head. Naturally, other approaches may be utilized for navigating and zooming within a spherical video. In general, changes, or adjustments, to the viewport can be monitored, in real-time (e.g., constantly or at specified time intervals) by the view direction module 204 and the view zoom level module 206. Such changes can then be used to update the viewport so that appropriate images and/or streams from the virtual content item can be presented to the user, as determined based on the changes to the viewport.

As mentioned, in some instances, not being able to track the changes to the viewport may cause the user to become disorientated with respect to the virtual content being accessed and such disorientation may degrade the user experience. Thus, in various embodiments, the indicator module 208 can be configured to provide a navigation indicator in the viewport through which virtual content is presented. In some embodiments, the navigation indicator is provided as an overlay within the viewport. The navigation indicator can visually indicate i) a direction, or heading, of the viewport in the scene(s) captured by the virtual content and/or ii) a zoom level of the viewport within the scene(s). In some embodiments, the direction indicated by the navigation indicator can be determined based on yaw (i.e., movement of the viewport along a vertical axis). However, depending on the implementation, the navigation indicator may also indicate the pitch (i.e., movement of the viewport along a lateral axis) and/or roll (i.e., movement of the viewport along a longitudinal axis). The navigation indicator can automatically be updated as the user interacts with a virtual content item to reflect the direction and/or zoom level of the viewport at any given point while the virtual content item is being accessed.

In some embodiments, the points of interest module 210 can be used to identify various points of interest within the scenes of the virtual content item being accessed. In some embodiments, a point of interest may be defined as a spatial region in the scene(s) at a moment in time, or period of time, corresponding to the video stream being presented through the viewport. In some embodiments, such points of interest may be specified, for example, by a publisher of the virtual content item. In general, each point of interest can be associated with a given location (e.g., coordinates) within the scene(s) captured by the virtual content item. In some embodiments, the navigation indicator can identify points of interest that are within a threshold distance of the viewport location in a scene being presented through the viewport. In various embodiments, the navigation indicator can visually indicate the respective location, or direction, of a point of interest. Depending on the implementation, however, other approaches for visually indicating points of interest may be used separately or in addition to the navigation indicator. For example, in some embodiments, a point of interest may be visually indicated using a directional indicator (e.g., arrow) that points to the position or direction of the point of interest. In this example, if the point of interest is located to the right of the viewport, then an arrow pointing to the right may be displayed in some region of the viewport. Similarly, if the point of interest is located in a direction that is behind the direction being faced by the viewport, then an arrow instructing the user to turn around may be displayed. In some embodiments, points of interest can be labeled with text. For example, a point of interest, such as a landmark, can be labeled with descriptive text including the name of the point of interest, its location, and/or facts about the point of interest.

In some embodiments, points of interest in scenes captured by a virtual content item can be defined, or labeled, by users while viewing the scene. In one example, a user viewing a scene can tag some feature in a scene as a point of interest. The user can also provide a text label or comment to be associated with the point of interest. In some embodiments, user defined points of interest can be saved so that other users that subsequently access the virtual content item will be able to see the points of interest tagged by the user as well as any text labels or comments provided by the user. Thus, in such embodiments, user defined points of interest can be visually identified while a user is accessing the virtual content item using any of the approaches described above including, for example, a navigation indicator. In some embodiments, user defined points of interest are not incorporated in the virtual content item. Rather, a copy of the virtual content item that incorporates the user defined points of interest can be saved. The user can then share the modified copy of the virtual content item with other users, for example, through the social networking system. In some embodiments, user defined points of interest can be shared as screenshots and/or information describing where the respective points of interest may be found in a virtual content item (e.g., frame(s), timestamps, time range, location data such as coordinates, etc.).

In some embodiments, a user can record the viewport trajectory while viewing scenes captured by a virtual content item. Thus, in such embodiments, changes to the position and/or direction of the viewport made by the user while viewing scenes in the virtual content item can be saved as the user viewport trajectory for the virtual content item. The user can then share the viewport trajectory with other users, for example, through the social networking system. The viewport of a different user that accesses the shared viewport trajectory can be guided through the scenes captured by the virtual content item based on the changes made to the position and/or direction of the viewport by the user that shared the viewport trajectory.

In some embodiments, points of interest in a virtual content item can be determined automatically based on user viewport data. For example, the respective trajectories of user viewports while viewing a virtual content item can be analyzed to determine which scenes, or regions in scenes, were viewed by users. In some embodiments, one or more heat maps are generated for the virtual content item by aggregating the respective positions and/or directions of user viewports while viewing scenes in the virtual content item. In such embodiments, a heat map can be used to determine which of the scenes, or regions in the scenes, were more popular, or more interesting, than others in the aggregate. Such heat map information can be used to automatically identify certain scenes, or regions in scenes, as points of interest. In some embodiments, multiple heat maps can be generated for a virtual content item by aggregating viewport trajectories for different sets of users. In such embodiments, users may be categorized into different sets based on attributes such as demographics (e.g., gender, age range, etc.), interests (e.g., bird watching, snowboarding, etc.), and/or relationships (e.g., social connections, or "friends", in a social networking system), to name some examples. By generating separate heat maps for different sets of users, the points of interest module 210 can determine which points of interest in a virtual content item are most pertinent to a category, or set, of users depending on their shared attributes. In some embodiments, points of interest that are automatically generated for a virtual content item can be provided to the publisher of the virtual content item as suggestions. The publisher can opt to incorporate or identify the generated points of interest in the virtual content item. Once identified, the generated points of interest can be visually indicated while a user is accessing the virtual content item using any of the approaches described above including, for example, a navigation indicator.

In some instances, a publisher may pre-define viewport trajectories for users that view a virtual content item as part of an auto mode. In such instances, the auto mode module 212 allows the user to engage or disengage auto mode at any time while accessing the virtual content item. In some embodiments, an auto mode may be activated by default when the virtual content item is accessed. In such embodiments, while in auto mode, the viewport can be navigated automatically through the scene(s) in the virtual content item based on the pre-defined viewport trajectory. In some embodiments, a viewport trajectory defines the respective positions and/or directions of the viewport during playback of one or more portions of the virtual content item or for the virtual content item in its entirety.

In some embodiments, the publisher may specify one or more points of interest in the scene(s) and, when auto mode is engaged, the viewport can automatically be guided to the points of interest. In such embodiments, the respective trajectories as the viewport moves between the points of interest can be generated automatically. In some embodiments, points of interest may be associated with temporal information that indicates an amount of time at which the viewport should focus on the point of interest (e.g., 3 seconds at a first point of interest, 5 seconds at a second point of interest, etc.). In such embodiments, the auto mode module 212 can appropriately navigate the viewport with respect to such temporal information. In some embodiments, a first color scheme is used for the navigation indicator when auto mode is engaged and a second color scheme (e.g., a color scheme that is inverse of the first color scheme) is used for the navigation indicator when auto mode is disengaged, i.e., when manual mode is active.

The motion transition module 214 can be configured to control the movement of the viewport while auto mode is engaged. For example, in some embodiments, the viewport is automatically transitioned to display scenes and/or points of interest as they appear in auto mode. When transitioning between scenes and/or points of interest, the motion transition module 214 may apply one or more different film transitioning techniques. In one example, the transitioning may be performed using a dissolve effect in which the transition between scenes and/or points of interest is gradual. In another example, the transitioning may be performed using a cut effect. Other examples include a wipe transition effect, linear transitioning, easing, and hinting (e.g., using a directional indicator before performing a transition). In some embodiments, the viewport is not automatically transitioned when in auto mode. Instead, a point of interest may be visually indicated in the viewport using a directional indicator (e.g., arrow) that points to the position or direction of the point of interest. In such embodiments, the user has the option to manually maneuver the viewport to correspond to the point of interest. In some embodiments, the motion transition module 214 may apply different film transitioning techniques depending on the type of device being used (e.g., mobile computing device, a virtual reality system, a head mounted display, etc.). For example, viewport transitions may be automatic in mobile computing devices but not in virtual reality systems and/or head mounted displays. The device type may also affect how the viewport is transitioned between scenes and/or points of interest as well as which transition effects are used. For example, the directional indicator and/or dissolve effect may be used to perform the viewport transitions when the device is a virtual reality head mounted display. In another example, transition effects may be disabled when performing viewport transitions when the device is a mobile computing device.

**FIGURE 3** illustrates an example of a content director module 302, according to an embodiment of the present disclosure. In some embodiments, the content director module 108 of **FIGURE 1** can be implemented with the content director module 302. As shown in the example of **FIGURE 3****,** the content director module 302 can include an interface module 304, a points of interest module 306, and an auto mode module 308.

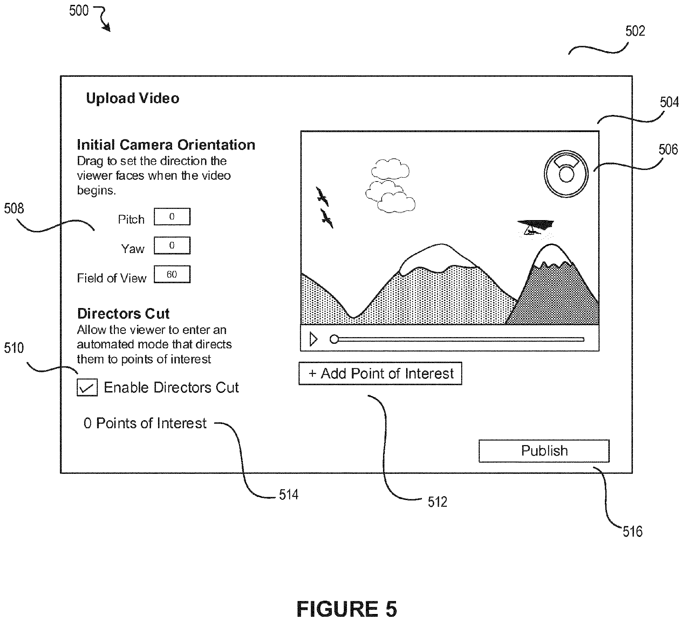

The interface module 304 can provide an interface that includes various options that may be utilized by a publisher to customize the user experience for a virtual content item. More details regarding this interface will be provided below in reference to **FIGURE 5****.** In some embodiments, the points of interest module 306 may be utilized to specify one or more points of interest in the virtual content item. Users viewing the virtual content item can be notified of such points of interest using any of the approaches described above including, for example, a navigation indicator. In one example, a point of interest may be defined by location (e.g., coordinates) and/or time period(s) at which the point of interest appears during playback of the virtual content item. The auto mode module 308 can be utilized to generate one or more viewport trajectories. In some embodiments, a viewport trajectory defines the respective positions and/or directions of the viewport during playback of one or more portions of the virtual content item or for the virtual content item in its entirety. For example, the auto mode module 308 can generate a viewport trajectory for navigating scenes in a virtual content item based on points of interest that were specified using the points of interest module 306. In some embodiments, the auto mode module 308 can be used to create a viewport trajectory for navigating scenes in the virtual content item based on specified positions and/or directions of the viewport during playback of one or more portions of the virtual content item or for the virtual content item in its entirety. For example, the publisher may specify the viewport position and/or direction for any given time during playback of a virtual content item.

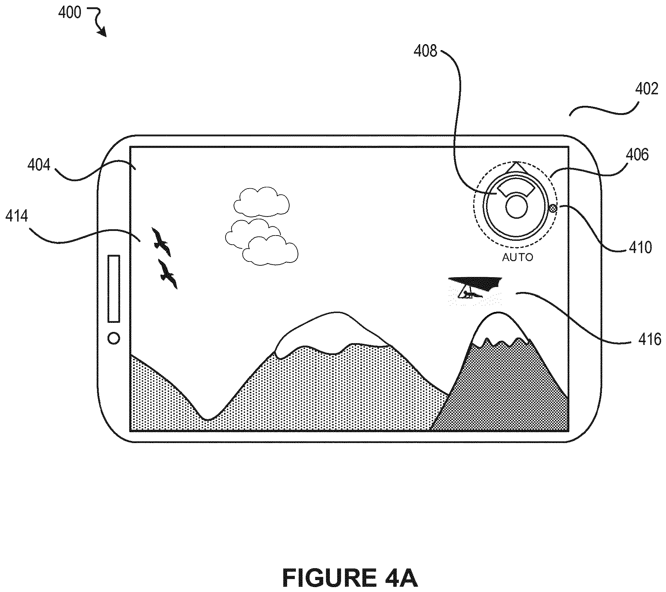

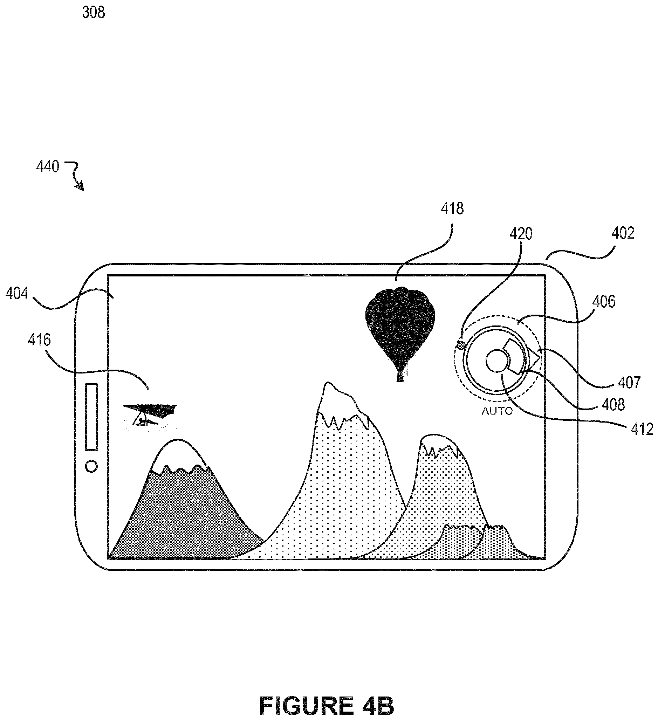

**FIGURE 4A** illustrates an example 400 of a viewport interface 404 in which a navigation indicator 406 is provided while a content item (e.g., virtual content item) is being accessed, according to an embodiment of the present disclosure. In this example, the viewport 404 is presented on a display screen of the computing device 402. Further, the viewport 404 may be provided through a software application (e.g., a web browser, a social networking application, etc.) running on the computing device 402. The location and/or size of the navigation indicator 406 as shown in the display screen may vary depending on the implementation. In the example of **FIGURE 4A****,** the viewport 404 is presenting a scene from a virtual content item. In this example, the scene includes, among other points of interest, a pair of birds 414 and a hang glider 416. The viewport 404 includes a navigation indicator 406 which includes a heading indicator 408 for identifying the direction and zoom level of the viewport. The navigation indicator 406 also indicates that a point of interest 410 has been identified and is located in an eastern direction relative to the viewport direction identified by the heading indicator 408. The user operating the computing device 402 can navigate to the scene, for example, by changing the direction and/or zoom level of the viewport. For example, the user can change the direction of the viewport to face the direction 410 corresponding to the point of interest. As a result, the viewport can be updated to present content (e.g., images and/or video streams) that corresponds to the direction 410, as illustrated in the example of **FIGURE 4B****.** In some embodiments, the navigation indicator 406 can also identify other types of events occurring in the scene(s) being accessed besides points of interest. For example, the navigation indicator 406 can indicate the direction of a sound that was made in a scene.

In some embodiments, the navigation indicator 406 is initially shown as being semi-transparent or faded. In such embodiments, the navigation indicator 406 becomes opaque upon detecting user interaction, for example, with the viewport 404 and/or the computing device 402. The navigation indicator 406 can also become opaque when the user performs a touch gesture in a region of the display screen that corresponds to the navigation indicator 406. For example, the navigation indicator 406 may detect user interaction based on sensors in the computing device. In some embodiments, the navigation indicator 406 may return to the semi-transparent or faded state if no user interaction is detected for a threshold period of time.

As mentioned, in some instances, a publisher may define an auto mode for users that view the virtual content item. In such instances, the user can engage or disengage auto mode at any time while accessing the virtual content item. In the example of **FIGURE 4A****,** auto mode is active and, as a result, the viewport 404 is being navigated automatically through the scene(s) in the virtual content item based on a pre-defined viewport trajectory. In some embodiments, auto mode may be activated by default when the virtual content item is accessed. The user operating the computing device 402 may deactivate auto mode, for example, by manually navigating the viewport 404 or by selecting (e.g., performing a tap gesture) a region in the display screen that corresponds to the navigation indicator 406. In some embodiments, auto mode is re-activated when the user has not manually navigated the viewport for a threshold amount of time. In some embodiments, the publisher may specify one or more points of interest in the scene(s) and, when auto mode is engaged, the viewport 404 can automatically be guided to the points of interest. In the example of **FIGURE 4A****,** the viewport 404 is automatically navigated toward the point of interest 410, as illustrated in the example of **FIGURE 4B****.**

**FIGURE 4B** illustrates an example 440 of the viewport interface 404 in which the navigation indicator 406 is provided while the content item (e.g., virtual content item) is being accessed, according to an embodiment of the present disclosure. As mentioned, while auto mode is engaged, the viewport 404 can automatically be guided to points of interest. In this example, the direction of the viewport 404, which is presented on the display screen of the computing device 402, has been changed to face the direction corresponding to the point of interest 418 that was indicated in the navigation indicator 406 in **FIGURE 4A** as a point of interest 410. Thus, in this example, both the intended heading 407, which follows a pre-defined trajectory while in auto mode, and the heading indicator 408 correspond to a direction in which the point of interest 418 is visible. As a result, the scene presented in the viewport 404 has been updated to present content (e.g., images and/or video streams) that corresponds to the viewport adjustment. In this example, the scene shows, among other points of interest, the hang glider 416 and a hot air balloon 418 that was identified by the navigation indicator 406 as the point of interest 410. In **FIGURE 4B****,** the heading indicator 408 has been rotated to the right around the point 412 to correspond to the change in the direction of the viewport. In some embodiments, the user operating the computing device 402 can perform a touch gesture in a region of the display screen that corresponds to the navigation indicator 406 to cause the viewport to return to the initial, or intended, heading defined for the virtual content item, e.g., auto mode. In such embodiments, the zoom level of the viewport is also reset to the default or intended zoom level that was defined for the virtual content item upon detecting the touch gesture. The heading indicator 408 may rotate around the point 412 in a clockwise or counter-clockwise direction, for example, depending on the direction in which the user navigates the viewport. For example, changes to the viewport direction from 0 to 180 degrees may cause the heading indicator 408 to rotate around the point 412 in a clockwise direction while changes to the viewport direction from 180 to 360 degrees may cause the heading indicator 408 to rotate around the point 412 in a counter-clockwise direction. In the example of **FIGURE 4B****,** auto mode is still active and, as a result, the viewport 404 is navigated automatically through the scene(s) in the virtual content item based on a pre-defined viewport trajectory. In this example, the viewport 404 will automatically be navigated toward the point of interest 420 shown in the navigation indicator 406.

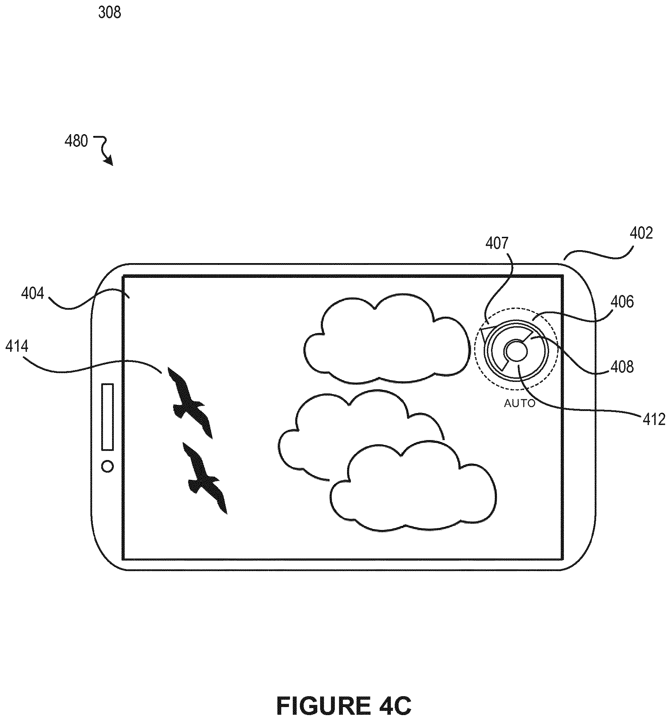

**FIGURE 4C** illustrates an example 480 of the viewport interface 404 in which the navigation indicator 406 is provided while the content item (e.g., virtual content item) is being accessed, according to an embodiment of the present disclosure. As mentioned, while auto mode is engaged, the viewport 404 can automatically be guided to points of interest. In this example, the direction of the viewport 404, which is presented on the display screen of the computing device 402, has been changed to face the pair of birds 414 that were shown in the scene in **FIGURE 4A****.** Thus, in this example, both the intended heading 407, which follows a pre-defined trajectory while in auto mode, and the heading indicator 408 correspond to a direction in which the point of interest 414 is visible. In the example of **FIGURE 4C****,** the user operating the computing device 402 has the option to manually navigate the viewport 404. When being navigated manually, auto mode is deactivated and the viewport 404 is no longer guided automatically based on a pre-defined trajectory. The user has the option to re-activate auto mode, for example, by selecting a region in the display screen that corresponds to the navigation indicator 406.

**FIGURE 5** illustrates an example 500 of a publisher interface 502 for customizing the user experience for a virtual content item, according to an embodiment of the present disclosure. The example interface 502 includes a region 504 through which the virtual content item can be played. Any customization, or modification, of the virtual content item can be reflected during playback of the virtual content item in the region 504. A navigation indicator 506 can be included in the region 504 so that the publisher can visualize the position and/or direction of the viewport. In some embodiments, the publisher can define an initial camera orientation 508 for the viewport to be used when the virtual content item begins playing. The initial camera orientation 508 may be defined by specifying corresponding degree values for pitch, yaw, and/or field of view, for example.

In some embodiments, the publisher can enable an auto mode 510, or "director's cut", that allows users viewing the virtual content item to enter an automated mode that automatically navigates their viewports through scenes in the virtual content item. In some embodiments, when auto mode is enabled, a user's viewport can automatically transition to points of interest in the virtual content item. The respective trajectories of the viewport between points of interest may be generated automatically. The publisher can use an option 512 to add points of interest while viewing the virtual content item in the region 504. For example, while the virtual content item is being played in the region 504, the publisher can select the option 512 to select and tag a point of interest. The tagged point of interest may correspond to a feature in a scene, a region in a scene, a set of frames, to name some examples. A points of interest indicator 514 can keep count of the number of points of interest that have so far been tagged by the publisher. The publisher can select an option 516 to publish the virtual content item, for example, to the social networking system. The published virtual content item can include information that describes the various points of interest that were specified as well as any specified viewport trajectories. This information can be utilized when a user is accessing the virtual content item so that the points of interest can be displayed as appropriate. In some embodiments, the publisher can create a completely automated version of the "director's cut" video (e.g., an auto-generated fallback user interface) that automatically navigates a user's viewport through scenes and/or points of interest in the virtual content item as specified by the publisher. Depending on the implementation, as the auto-generated "director's cut" video is being played, the user accessing the video is not permitted to change the direction of the viewport, or to change the zoom level of the viewport, or both. In some embodiments, different formats of the auto-generated "director's cut" video can be generated. For example, the automated version of the "director's cut" video can be formatted as a spherical video, a regular rectilinear video, a two-dimensional (2D) video, or a three-dimensional (3D) video, to name some examples. In such embodiments, various attributes can used to determine which format should be provided to the computing device of the user for playback. For example, the format provided may be determined based, in part, on the characteristics of the computing device (e.g., which formats can be played on the computing device), user preferences, or both. In some embodiments, some formats of the auto-generated "director's cut" video can serve as a fallback option in case the user's computing device is unable to playback a default, or preferred, format of the video. For example, the publisher may specify that a spherical video version of the "director's cut" video be provided to users by default. In instances where a user's computing device is unable to playback the spherical video version of the video, a different version (e.g., two-dimensional version of the video) may be provided in lieu of the specified video version.

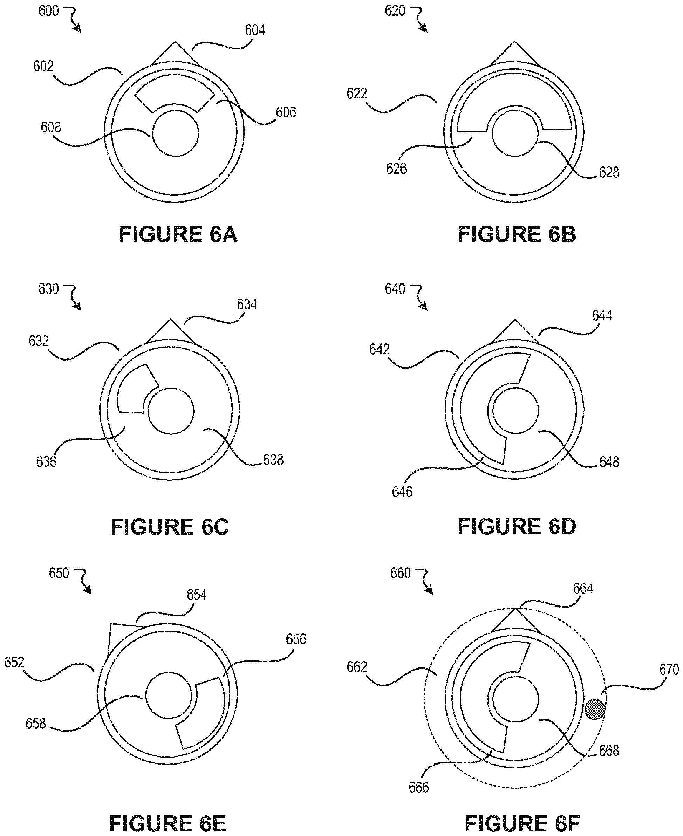

**FIGURE 6A** illustrates an example 600 of a navigation indicator 602 that can be presented in a viewport interface when a content item (e.g., virtual content item) is being accessed. In **FIGURE 6A****,** the navigation indicator 602 indicates an initial, or intended, direction 604 of the viewport while the virtual content item is being accessed. The direction 604 may be specified by a publisher of the virtual content item, for example, and may change at different points in time during play-back of the virtual content item. The navigation indicator 602 also includes a heading indicator 606 that indicates a direction, or heading, of the viewport while accessing the scene(s) captured by the virtual content. In this example, the direction of the viewport is indicated by the direction of the heading indicator 606. As the viewport direction changes, the heading indicator 606 can rotate around a point 608 to face a direction that corresponds to the updated viewport direction. In some embodiments, the direction indicated by the heading indicator 606 corresponds to the movement of the viewport along a vertical axis (i.e., yaw). The heading indicator 606 can also indicate a zoom level of the viewport in the scene(s) being accessed. In some embodiments, the length, or size, of the heading indicator 606 increases, or elongates, around the point 608 to indicate a higher zoom level of the viewport. In such embodiments, the length, or size, of the heading indicator 606 decreases, or constricts, around the point 608 to indicate a reduced zoom level of the viewport. In some embodiments, a virtual content item may be associated with a default zoom level (e.g., 60 degrees or some other specified zoom level). In some embodiments, a publisher of a virtual content item may specify a minimum and/or maximum zoom level that may be applied through the viewport.

**FIGURE 6B** illustrates an example 620 of a navigation indicator 622 that can be presented in a viewport interface when a content item (e.g., virtual content item) is being accessed. In **FIGURE 6B****,** the viewport accessing the virtual content item is zoomed in to a scene. As a result, the heading indicator 626 is shown as being elongated, or increased in size, around the point 628 to indicate the increased zoom level of the viewport.

**FIGURE 6C** illustrates an example 630 of a navigation indicator 632 that can be presented in a viewport interface when a content item (e.g., virtual content item) is being accessed. In **FIGURE 6C****,** the direction of the viewport accessing the virtual content item is facing west, or left, relative to the initial, or intended, direction 634 of the viewport. Further, the viewport is zoomed out from the scene being viewed. As a result, the heading indicator 636 is shown as being rotated to the left around the point 638 to indicate the direction of the viewport. Further, the heading indicator 636 is shown as being constricted, or decreased in size, around the point 638 to indicate the decreased zoom level of the viewport.

**FIGURE 6D** illustrates an example 640 of a navigation indicator 642 that can be presented in a viewport interface when a content item (e.g., virtual content item) is being accessed. In **FIGURE 6D****,** the viewport accessing the virtual content item is zoomed in to a scene of the virtual content item. Moreover, the direction of the viewport accessing the virtual content item is facing west, or left, relative to the initial, or intended, direction 644 of the viewport. As a result, the heading indicator 646 is shown as being elongated, or increased in size, around the point 648 to indicate the increased zoom level of the viewport. Further, the heading indicator 646 is also shown as being rotated to the left around the point 648 to indicate the direction of the viewport.

**FIGURE 6E** illustrates an example 650 of a navigation indicator 652 that can be presented in a viewport interface when a content item (e.g., virtual content item) is being accessed. In **FIGURE 6E****,** the initial, or intended, direction 654 of the viewport has been updated. Changes to the intended direction 654 may result at different points in time during playback of the virtual content item, for example, when accessing a scene through which the viewport is guided (e.g., a view from a moving vehicle). In this example, the viewport accessing the virtual content item is facing an opposite direction relative to the intended direction 654 of the viewport. As a result, the heading indicator 656 is shown as being rotated around the point 658 in an opposite direction relative to the intended direction 654.

**FIGURE 6F** illustrates an example 660 of a navigation indicator 662 that can be presented in a viewport interface when a content item (e.g., virtual content item) is being accessed. In **FIGURE 6F****,** the viewport accessing the virtual content item is zoomed in to a scene of the virtual content item. Further, the direction of the viewport accessing the virtual content item is facing west, or left, relative to the initial, or intended, direction 664 of the viewport. As a result, the heading indicator 666 is shown as being elongated, or increased in size, around the point 668 to indicate the increased zoom level of the viewport. Further, the heading indicator 666 is also shown as being rotated to the left around the point 668 to indicate the direction of the viewport. In some embodiments, the navigation indicator 662 can identify various points of interest within the scenes of the virtual content item being accessed. In such embodiments, the navigation indicator 662 can visually indicate the respective direction 670 of a point of interest, for example, relative to the direction 664 and/or the heading indicator 666. Such points of interest may be specified, for example, by a publisher of the virtual content item. In general, each point of interest can be associated with a given location within the scene(s) captured by the virtual content item with respect to a point in time corresponding to the scene (e.g., stream or feed) being accessed. In some embodiments, the navigation indicator 662 can identify points of interest that are within a threshold distance of the viewport location in a scene being presented through the viewport.

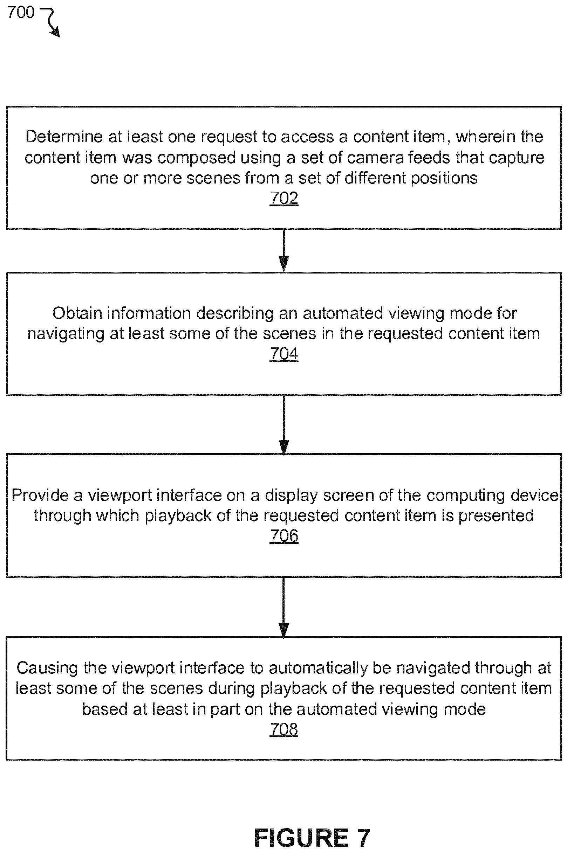

**FIGURE 7** illustrates an example method 700 for navigating a viewport interface, according to an embodiment of the present disclosure. It should be appreciated that there can be additional, fewer, or alternative steps performed in similar or alternative orders, or in parallel, within the scope of the various embodiments discussed herein unless otherwise stated.

At block 702, at least one request to access a content item is determined. The requested content item being composed using a set of camera feeds that capture one or more scenes from a set of different positions. At block 704, information describing an automated viewing mode for navigating at least some of the scenes in the requested content item is obtained. At block 706, a viewport interface is provided on a display screen of the computing device through which playback of the requested content item is presented. At block 708, the viewport interface is automatically navigated through at least some of the scenes during playback of the requested content item based at least in part on the automated viewing mode.

It is contemplated that there can be many other uses, applications, and/or variations associated with the various embodiments of the present disclosure. For example, in some cases, user can choose whether or not to opt-in to utilize the disclosed technology. The disclosed technology can also ensure that various privacy settings and preferences are maintained and can prevent private information from being divulged. In another example, various embodiments of the present disclosure can learn, improve, and/or be refined over time.

### SOCIAL NETWORKING SYSTEM - EXAMPLE IMPLEMENTATION

**FIGURE 8** illustrates a network diagram of an example system 800 that can be utilized in various scenarios, in accordance with an embodiment of the present disclosure. The system 800 includes one or more user devices 810, one or more external systems 820, a social networking system (or service) 830, and a network 850. In an embodiment, the social networking service, provider, and/or system discussed in connection with the embodiments described above may be implemented as the social networking system 830. For purposes of illustration, the embodiment of the system 800, shown by **FIGURE 8****,** includes a single external system 820 and a single user device 810. However, in other embodiments, the system 800 may include more user devices 810 and/or more external systems 820. In certain embodiments, the social networking system 830 is operated by a social network provider, whereas the external systems 820 are separate from the social networking system 830 in that they may be operated by different entities. In various embodiments, however, the social networking system 830 and the external systems 820 operate in conjunction to provide social networking services to users (or members) of the social networking system 830. In this sense, the social networking system 830 provides a platform or backbone, which other systems, such as external systems 820, may use to provide social networking services and functionalities to users across the Internet.

The user device 810 comprises one or more computing devices (or systems) that can receive input from a user and transmit and receive data via the network 850. In one embodiment, the user device 810 is a conventional computer system executing, for example, a Microsoft Windows compatible operating system (OS), Apple OS X, and/or a Linux distribution. In another embodiment, the user device 810 can be a computing device or a device having computer functionality, such as a smart-phone, a tablet, a personal digital assistant (PDA), a mobile telephone, a laptop computer, a wearable device (e.g., a pair of glasses, a watch, a bracelet, etc.), a camera, an appliance, etc. The user device 810 is configured to communicate via the network 850. The user device 810 can execute an application, for example, a browser application that allows a user of the user device 810 to interact with the social networking system 830. In another embodiment, the user device 810 interacts with the social networking system 830 through an application programming interface (API) provided by the native operating system of the user device 810, such as iOS and ANDROID. The user device 810 is configured to communicate with the external system 820 and the social networking system 830 via the network 850, which may comprise any combination of local area and/or wide area networks, using wired and/or wireless communication systems.

In one embodiment, the network 850 uses standard communications technologies and protocols. Thus, the network 850 can include links using technologies such as Ethernet, 802.11, worldwide interoperability for microwave access (WiMAX), 3G, 4G, CDMA, GSM, LTE, digital subscriber line (DSL), etc. Similarly, the networking protocols used on the network 850 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), and the like. The data exchanged over the network 850 can be represented using technologies and/or formats including hypertext markup language (HTML) and extensible markup language (XML). In addition, all or some links can be encrypted using conventional encryption technologies such as secure sockets layer (SSL), transport layer security (TLS), and Internet Protocol security (IPsec).

In one embodiment, the user device 810 may display content from the external system 820 and/or from the social networking system 830 by processing a markup language document 814 received from the external system 820 and from the social networking system 830 using a browser application 812. The markup language document 814 identifies content and one or more instructions describing formatting or presentation of the content. By executing the instructions included in the markup language document 814, the browser application 812 displays the identified content using the format or presentation described by the markup language document 814. For example, the markup language document 814 includes instructions for generating and displaying a web page having multiple frames that include text and/or image data retrieved from the external system 820 and the social networking system 830. In various embodiments, the markup language document 814 comprises a data file including extensible markup language (XML) data, extensible hypertext markup language (XHTML) data, or other markup language data. Additionally, the markup language document 814 may include JavaScript Object Notation (JSON) data, JSON with padding (JSONP), and JavaScript data to facilitate data-interchange between the external system 820 and the user device 810. The browser application 812 on the user device 810 may use a JavaScript compiler to decode the markup language document 814.

The markup language document 814 may also include, or link to, applications or application frameworks such as FLASH™ or Unity™ applications, the Silverlight™ application framework, etc.

In one embodiment, the user device 810 also includes one or more cookies 816 including data indicating whether a user of the user device 810 is logged into the social networking system 830, which may enable modification of the data communicated from the social networking system 830 to the user device 810.

The external system 820 includes one or more web servers that include one or more web pages 822a, 822b, which are communicated to the user device 810 using the network 850. The external system 820 is separate from the social networking system 830. For example, the external system 820 is associated with a first domain, while the social networking system 830 is associated with a separate social networking domain. Web pages 822a, 822b, included in the external system 820, comprise markup language documents 814 identifying content and including instructions specifying formatting or presentation of the identified content. As discussed previously, it should be appreciated that there can be many variations or other possibilities.

The social networking system 830 includes one or more computing devices for a social network, including a plurality of users, and providing users of the social network with the ability to communicate and interact with other users of the social network. In some instances, the social network can be represented by a graph, i.e., a data structure including edges and nodes. Other data structures can also be used to represent the social network, including but not limited to databases, objects, classes, meta elements, files, or any other data structure. The social networking system 830 may be administered, managed, or controlled by an operator. The operator of the social networking system 830 may be a human being, an automated application, or a series of applications for managing content, regulating policies, and collecting usage metrics within the social networking system 830. Any type of operator may be used.

Users may join the social networking system 830 and then add connections to any number of other users of the social networking system 830 to whom they desire to be connected. As used herein, the term "friend" refers to any other user of the social networking system 830 to whom a user has formed a connection, association, or relationship via the social networking system 830. For example, in an embodiment, if users in the social networking system 830 are represented as nodes in the social graph, the term "friend" can refer to an edge formed between and directly connecting two user nodes.

Connections may be added explicitly by a user or may be automatically created by the social networking system 830 based on common characteristics of the users (e.g., users who are alumni of the same educational institution). For example, a first user specifically selects a particular other user to be a friend. Connections in the social networking system 830 are usually in both directions, but need not be, so the terms "user" and "friend" depend on the frame of reference. Connections between users of the social networking system 830 are usually bilateral ("two-way"), or "mutual," but connections may also be unilateral, or "one-way." For example, if Bob and Joe are both users of the social networking system 830 and connected to each other, Bob and Joe are each other's connections. If, on the other hand, Bob wishes to connect to Joe to view data communicated to the social networking system 830 by Joe, but Joe does not wish to form a mutual connection, a unilateral connection may be established. The connection between users may be a direct connection; however, some embodiments of the social networking system 830 allow the connection to be indirect via one or more levels of connections or degrees of separation.

In addition to establishing and maintaining connections between users and allowing interactions between users, the social networking system 830 provides users with the ability to take actions on various types of items supported by the social networking system 830. These items may include groups or networks (i.e., social networks of people, entities, and concepts) to which users of the social networking system 830 may belong, events or calendar entries in which a user might be interested, computer-based applications that a user may use via the social networking system 830, transactions that allow users to buy or sell items via services provided by or through the social networking system 830, and interactions with advertisements that a user may perform on or off the social networking system 830. These are just a few examples of the items upon which a user may act on the social networking system 830, and many others are possible. A user may interact with anything that is capable of being represented in the social networking system 830 or in the external system 820, separate from the social networking system 830, or coupled to the social networking system 830 via the network 850.

The social networking system 830 is also capable of linking a variety of entities. For example, the social networking system 830 enables users to interact with each other as well as external systems 820 or other entities through an API, a web service, or other communication channels. The social networking system 830 generates and maintains the "social graph" comprising a plurality of nodes interconnected by a plurality of edges. Each node in the social graph may represent an entity that can act on another node and/or that can be acted on by another node. The social graph may include various types of nodes. Examples of types of nodes include users, non-person entities, content items, web pages, groups, activities, messages, concepts, and any other things that can be represented by an object in the social networking system 830. An edge between two nodes in the social graph may represent a particular kind of connection, or association, between the two nodes, which may result from node relationships or from an action that was performed by one of the nodes on the other node. In some cases, the edges between nodes can be weighted. The weight of an edge can represent an attribute associated with the edge, such as a strength of the connection or association between nodes. Different types of edges can be provided with different weights. For example, an edge created when one user "likes" another user may be given one weight, while an edge created when a user befriends another user may be given a different weight.

As an example, when a first user identifies a second user as a friend, an edge in the social graph is generated connecting a node representing the first user and a second node representing the second user. As various nodes relate or interact with each other, the social networking system 830 modifies edges connecting the various nodes to reflect the relationships and interactions.

The social networking system 830 also includes user-generated content, which enhances a user's interactions with the social networking system 830. User-generated content may include anything a user can add, upload, send, or "post" to the social networking system 830. For example, a user communicates posts to the social networking system 830 from a user device 810. Posts may include data such as status updates or other textual data, location information, images such as photos, videos, links, music or other similar data and/or media. Content may also be added to the social networking system 830 by a third party. Content "items" are represented as objects in the social networking system 830. In this way, users of the social networking system 830 are encouraged to communicate with each other by posting text and content items of various types of media through various communication channels. Such communication increases the interaction of users with each other and increases the frequency with which users interact with the social networking system 830.

The social networking system 830 includes a web server 832, an API request server 834, a user profile store 836, a connection store 838, an action logger 840, an activity log 842, and an authorization server 844. In an embodiment of the invention, the social networking system 830 may include additional, fewer, or different components for various applications. Other components, such as network interfaces, security mechanisms, load balancers, failover servers, management and network operations consoles, and the like are not shown so as to not obscure the details of the system.

The user profile store 836 maintains information about user accounts, including biographic, demographic, and other types of descriptive information, such as work experience, educational history, hobbies or preferences, location, and the like that has been declared by users or inferred by the social networking system 830. This information is stored in the user profile store 836 such that each user is uniquely identified. The social networking system 830 also stores data describing one or more connections between different users in the connection store 838. The connection information may indicate users who have similar or common work experience, group memberships, hobbies, or educational history. Additionally, the social networking system 830 includes user-defined connections between different users, allowing users to specify their relationships with other users. For example, user-defined connections allow users to generate relationships with other users that parallel the users' real-life relationships, such as friends, co-workers, partners, and so forth. Users may select from predefined types of connections, or define their own connection types as needed. Connections with other nodes in the social networking system 830, such as non-person entities, buckets, cluster centers, images, interests, pages, external systems, concepts, and the like are also stored in the connection store 838.

The social networking system 830 maintains data about objects with which a user may interact. To maintain this data, the user profile store 836 and the connection store 838 store instances of the corresponding type of objects maintained by the social networking system 830. Each object type has information fields that are suitable for storing information appropriate to the type of object. For example, the user profile store 836 contains data structures with fields suitable for describing a user's account and information related to a user's account. When a new object of a particular type is created, the social networking system 830 initializes a new data structure of the corresponding type, assigns a unique object identifier to it, and begins to add data to the object as needed. This might occur, for example, when a user becomes a user of the social networking system 830, the social networking system 830 generates a new instance of a user profile in the user profile store 836, assigns a unique identifier to the user account, and begins to populate the fields of the user account with information provided by the user.

The connection store 838 includes data structures suitable for describing a user's connections to other users, connections to external systems 820 or connections to other entities. The connection store 838 may also associate a connection type with a user's connections, which may be used in conjunction with the user's privacy setting to regulate access to information about the user. In an embodiment of the invention, the user profile store 836 and the connection store 838 may be implemented as a federated database.

Data stored in the connection store 838, the user profile store 836, and the activity log 842 enables the social networking system 830 to generate the social graph that uses nodes to identify various objects and edges connecting nodes to identify relationships between different objects. For example, if a first user establishes a connection with a second user in the social networking system 830, user accounts of the first user and the second user from the user profile store 836 may act as nodes in the social graph. The connection between the first user and the second user stored by the connection store 838 is an edge between the nodes associated with the first user and the second user. Continuing this example, the second user may then send the first user a message within the social networking system 830. The action of sending the message, which may be stored, is another edge between the two nodes in the social graph representing the first user and the second user. Additionally, the message itself may be identified and included in the social graph as another node connected to the nodes representing the first user and the second user.

In another example, a first user may tag a second user in an image that is maintained by the social networking system 830 (or, alternatively, in an image maintained by another system outside of the social networking system 830). The image may itself be represented as a node in the social networking system 830. This tagging action may create edges between the first user and the second user as well as create an edge between each of the users and the image, which is also a node in the social graph. In yet another example, if a user confirms attending an event, the user and the event are nodes obtained from the user profile store 836, where the attendance of the event is an edge between the nodes that may be retrieved from the activity log 842. By generating and maintaining the social graph, the social networking system 830 includes data describing many different types of objects and the interactions and connections among those objects, providing a rich source of socially relevant information.

The web server 832 links the social networking system 830 to one or more user devices 810 and/or one or more external systems 820 via the network 850. The web server 832 serves web pages, as well as other web-related content, such as Java, JavaScript, Flash, XML, and so forth. The web server 832 may include a mail server or other messaging functionality for receiving and routing messages between the social networking system 830 and one or more user devices 810. The messages can be instant messages, queued messages (e.g., email), text and SMS messages, or any other suitable messaging format.

The API request server 834 allows one or more external systems 820 and user devices 810 to call access information from the social networking system 830 by calling one or more API functions. The API request server 834 may also allow external systems 820 to send information to the social networking system 830 by calling APIs. The external system 820, in one embodiment, sends an API request to the social networking system 830 via the network 850, and the API request server 834 receives the API request. The API request server 834 processes the request by calling an API associated with the API request to generate an appropriate response, which the API request server 834 communicates to the external system 820 via the network 850. For example, responsive to an API request, the API request server 834 collects data associated with a user, such as the user's connections that have logged into the external system 820, and communicates the collected data to the external system 820. In another embodiment, the user device 810 communicates with the social networking system 830 via APIs in the same manner as external systems 820.

The action logger 840 is capable of receiving communications from the web server 832 about user actions on and/or off the social networking system 830. The action logger 840 populates the activity log 842 with information about user actions, enabling the social networking system 830 to discover various actions taken by its users within the social networking system 830 and outside of the social networking system 830. Any action that a particular user takes with respect to another node on the social networking system 830 may be associated with each user's account, through information maintained in the activity log 842 or in a similar database or other data repository. Examples of actions taken by a user within the social networking system 830 that are identified and stored may include, for example, adding a connection to another user, sending a message to another user, reading a message from another user, viewing content associated with another user, attending an event posted by another user, posting an image, attempting to post an image, or other actions interacting with another user or another object. When a user takes an action within the social networking system 830, the action is recorded in the activity log 842. In one embodiment, the social networking system 830 maintains the activity log 842 as a database of entries. When an action is taken within the social networking system 830, an entry for the action is added to the activity log 842. The activity log 842 may be referred to as an action log.

Additionally, user actions may be associated with concepts and actions that occur within an entity outside of the social networking system 830, such as an external system 820 that is separate from the social networking system 830. For example, the action logger 840 may receive data describing a user's interaction with an external system 820 from the web server 832. In this example, the external system 820 reports a user's interaction according to structured actions and objects in the social graph.

Other examples of actions where a user interacts with an external system 820 include a user expressing an interest in an external system 820 or another entity, a user posting a comment to the social networking system 830 that discusses an external system 820 or a web page 822a within the external system 820, a user posting to the social networking system 830 a Uniform Resource Locator (URL) or other identifier associated with an external system 820, a user attending an event associated with an external system 820, or any other action by a user that is related to an external system 820. Thus, the activity log 842 may include actions describing interactions between a user of the social networking system 830 and an external system 820 that is separate from the social networking system 830.

The authorization server 844 enforces one or more privacy settings of the users of the social networking system 830. A privacy setting of a user determines how particular information associated with a user can be shared. The privacy setting comprises the specification of particular information associated with a user and the specification of the entity or entities with whom the information can be shared. Examples of entities with which information can be shared may include other users, applications, external systems 820, or any entity that can potentially access the information. The information that can be shared by a user comprises user account information, such as profile photos, phone numbers associated with the user, user's connections, actions taken by the user such as adding a connection, changing user profile information, and the like.

The privacy setting specification may be provided at different levels of granularity. For example, the privacy setting may identify specific information to be shared with other users; the privacy setting identifies a work phone number or a specific set of related information, such as, personal information including profile photo, home phone number, and status. Alternatively, the privacy setting may apply to all the information associated with the user. The specification of the set of entities that can access particular information can also be specified at various levels of granularity. Various sets of entities with which information can be shared may include, for example, all friends of the user, all friends of friends, all applications, or all external systems 820. One embodiment allows the specification of the set of entities to comprise an enumeration of entities. For example, the user may provide a list of external systems 820 that are allowed to access certain information. Another embodiment allows the specification to comprise a set of entities along with exceptions that are not allowed to access the information. For example, a user may allow all external systems 820 to access the user's work information, but specify a list of external systems 820 that are not allowed to access the work information. Certain embodiments call the list of exceptions that are not allowed to access certain information a "block list". External systems 820 belonging to a block list specified by a user are blocked from accessing the information specified in the privacy setting. Various combinations of granularity of specification of information, and granularity of specification of entities, with which information is shared are possible. For example, all personal information may be shared with friends whereas all work information may be shared with friends of friends.

The authorization server 844 contains logic to determine if certain information associated with a user can be accessed by a user's friends, external systems 820, and/or other applications and entities. The external system 820 may need authorization from the authorization server 844 to access the user's more private and sensitive information, such as the user's work phone number. Based on the user's privacy settings, the authorization server 844 determines if another user, the external system 820, an application, or another entity is allowed to access information associated with the user, including information about actions taken by the user.

In some embodiments, the social networking system 830 can include a content presentation module 846. The content presentation module 846 can, for example, be implemented as the content presentation module 102 of **FIGURE 1****.** In some embodiments, the user device 810 can include a content presentation module 818 that is configured to perform some, or all, of the features that can be performed by the content presentation module 102 of **FIGURE 1****.** As discussed previously, it should be appreciated that there can be many variations or other possibilities.

### HARDWARE IMPLEMENTATION

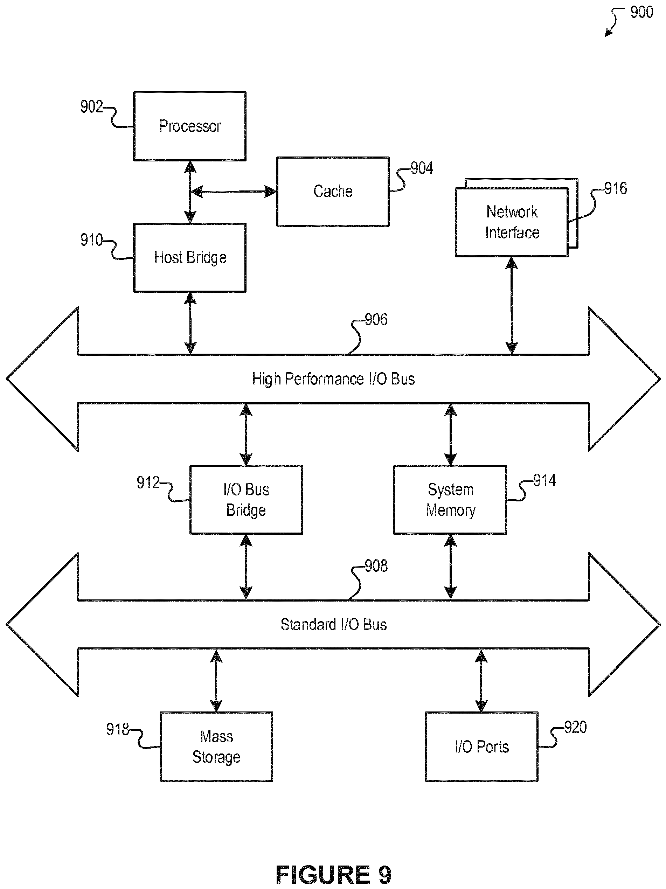

The foregoing processes and features can be implemented by a wide variety of machine and computer system architectures and in a wide variety of network and computing environments. **FIGURE 9** illustrates an example of a computer system 900 that may be used to implement one or more of the embodiments described herein in accordance with an embodiment of the invention. The computer system 900 includes sets of instructions for causing the computer system 900 to perform the processes and features discussed herein. The computer system 900 may be connected (e.g., networked) to other machines. In a networked deployment, the computer system 900 may operate in the capacity of a server machine or a client machine in a client-server network environment, or as a peer machine in a peer-to-peer (or distributed) network environment. In an embodiment of the invention, the computer system 900 may be the social networking system 830, the user device 810, and the external system 920, or a component thereof. In an embodiment of the invention, the computer system 900 may be one server among many that constitutes all or part of the social networking system 830.

The computer system 900 includes a processor 902, a cache 904, and one or more executable modules and drivers, stored on a computer-readable medium, directed to the processes and features described herein. Additionally, the computer system 900 includes a high performance input/output (I/O) bus 906 and a standard I/O bus 908. A host bridge 910 couples processor 902 to high performance I/O bus 906, whereas I/O bus bridge 912 couples the two buses 906 and 908 to each other. A system memory 914 and one or more network interfaces 916 couple to high performance I/O bus 906. The computer system 900 may further include video memory and a display device coupled to the video memory (not shown). Mass storage 918 and I/O ports 920 couple to the standard I/O bus 908. The computer system 900 may optionally include a keyboard and pointing device, a display device, or other input/output devices (not shown) coupled to the standard I/O bus 908. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 900, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Computer Inc. of Cupertino, California, UNIX operating systems, Microsoft® Windows® operating systems, BSD operating systems, and the like. Other implementations are possible.

The elements of the computer system 900 are described in greater detail below. In particular, the network interface 916 provides communication between the computer system 900 and any of a wide range of networks, such as an Ethernet (e.g., IEEE 802.3) network, a backplane, etc. The mass storage 918 provides permanent storage for the data and programming instructions to perform the above-described processes and features implemented by the respective computing systems identified above, whereas the system memory 914 (e.g., DRAM) provides temporary storage for the data and programming instructions when executed by the processor 902. The I/O ports 920 may be one or more serial and/or parallel communication ports that provide communication between additional peripheral devices, which may be coupled to the computer system 900.

The computer system 900 may include a variety of system architectures, and various components of the computer system 900 may be rearranged. For example, the cache 904 may be on-chip with processor 902. Alternatively, the cache 904 and the processor 902 may be packed together as a "processor module", with processor 902 being referred to as the "processor core". Furthermore, certain embodiments of the invention may neither require nor include all of the above components. For example, peripheral devices coupled to the standard I/O bus 908 may couple to the high performance I/O bus 906. In addition, in some embodiments, only a single bus may exist, with the components of the computer system 900 being coupled to the single bus. Moreover, the computer system 900 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 900 that, when read and executed by one or more processors, cause the computer system 900 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 900, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 902. Initially, the series of instructions may be stored on a storage device, such as the mass storage 918. However, the series of instructions can be stored on any suitable computer readable storage medium. Furthermore, the series of instructions need not be stored locally, and could be received from a remote storage device, such as a server on a network, via the network interface 916. The instructions are copied from the storage device, such as the mass storage 918, into the system memory 914 and then accessed and executed by the processor 902. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 900 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments.

The language used herein has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A computer-implemented method comprising:
determining, by a computing device, at least one request to access a content item,
wherein the requested content item is a spherical video that captures a 360° view of a scene that was composed stitching together a set of camera feeds that capture one or more scenes from a set of different positions;
obtaining, by the computing device, information describing an automated viewing mode for navigating at least some of the scenes in the requested content item;
providing, by the computing device, a viewport interface on a display screen of the computing device through which playback of the requested content item is presented; and
causing, by the computing device, the viewport interface to automatically be navigated through at least some of the scenes during playback of the requested content item based at least in part on the automated viewing mode;
wherein the content item allows a user to access, or playback, a video to view a portion of the video,
wherein, while accessing the video, the user can zoom and change the direction by pitching, yawing or rolling of the viewport to access another portion of the scene captured in the video,
wherein a navigation indicator (602) is presented in a viewport interface when the content item is being accessed, wherein the navigation indicator (602) indicates an initial, or intended, direction (604) of the viewport while the content item is being accessed, wherein the direction (604) is specified by a publisher of the content item,
and changes at different points in time during play-back of the content item, wherein the navigation indicator (602) also includes a heading indicator (606) that indicates a direction, or heading, of the viewport while accessing the scene(s) captured by the content, wherein the direction of the viewport is indicated by the direction of the heading indicator (606),
wherein as the viewport direction changes, the heading indicator (606) rotates around a point (608) to face a direction that corresponds to the updated viewport direction, wherein the direction indicated by the heading indicator (606) corresponds to the movement of the viewport along a vertical axis, wherein the heading indicator (606) also indicates a zoom level of the viewport in the scene(s) being accessed,
wherein the length, or size, of the heading indicator (606) increases, or elongates, around the point (608) to indicate a higher zoom level of the viewport, wherein the length, or size, of the heading indicator (606) decreases, or constricts, around the point (608) to indicate a reduced zoom level of the viewport,
wherein the content item is associated with a default zoom level, wherein a publisher of a content item may specify a minimum and/or maximum zoom level that is applied through the viewport, **characterized in that** the navigation indicator identifies points of interest that are within a threshold distance of the viewport location and outside of the viewport interface in a scene being presented through the viewport

2. The computer-implemented method of claim 1, wherein obtaining information describing the automated viewing mode further comprises:
obtaining, by the computing device, information describing at least one trajectory for navigating the viewport interface through at least some of the scenes during playback of the requested content item.

3. The computer-implemented method of claim 1 or 2, wherein obtaining information describing the at least one trajectory further comprises:
determining, by the computing device, a category corresponding to a user operating the computing device based at least in part on one or more attributes of the user; and
obtaining, by the computing device, the at least one trajectory that is associated with the category, the trajectory having been determined to be of interest to at least some users included in the category.

4. The computer-implemented method of any of claims 1 to 3, wherein obtaining information describing the automated viewing mode further comprises: obtaining, by the computing device, information describing at least one point of interest that appears during playback of the requested content item; and obtaining, by the computing device, information describing at least one trajectory for navigating the viewport interface through at least some of the scenes during playback of the requested content item, wherein the trajectory includes the at least one point of interest;
optionally wherein the at least one point of interest was defined by a publisher of the requested content item; and/or
optionally wherein obtaining information describing the at least one point of interest further comprises:
determining, by the computing device, a category corresponding to a user operating the computing device based at least in part on one or more attributes of the user; and
obtaining, by the computing device, the at least one point of interest that is associated with the category, the point of interest having been determined to be of interest to at least some users included in the category.

5. The computer-implemented method of any of claims 1 to 4, the method further comprising:
determining, by the computing device, that a user operating the computing device has performed one or more actions to manually navigate the viewport interface to a particular point of interest during playback of the requested content item;
determining, by the computing device, that an operation to share the particular point of interest was performed; and
causing, by the computing device, information describing the particular point of interest to be shared through a social networking system.

6. The computer-implemented method of any of claims 1 to 5, the method further comprising:
determining, by the computing device, that a user operating the computing device has performed one or more actions to manually navigate the viewport interface to create a customized trajectory during playback of the requested content item;
determining, by the computing device, that an operation to share the customized trajectory was performed; and
causing, by the computing device, information describing the customized trajectory to be shared through a social networking system.

7. The computer-implemented method of any of claims 1 to 6, wherein causing the viewport interface to automatically be navigated further comprises:
determining, by the computing device, that the requested content item includes a first point of interest and a second point of interest, wherein the second point of interest appears subsequent to the first point of interest during playback of the requested content item; and
causing, by the computing device, a directional indicator to be displayed in the viewport interface prior to automatically navigating the viewport interface from the first point of interest to the second point of interest, the directional indicator pointing in a direction that corresponds to the second point of interest.

8. The computer-implemented method of any of claims 1 to 7, wherein causing the viewport interface to automatically be navigated further comprises:
determining, by the computing device, that the requested content item includes a first point of interest and a second point of interest, wherein the second point of interest appears subsequent to the first point of interest during playback of the requested content item; and causing, by the computing device, the viewport interface to be navigated automatically from the first point of interest to the second point of interest using at least one film transitioning technique.

9. A system comprising:
at least one processor; and
a memory storing instructions that, when executed by the at least one processor, cause the system to perform:
determining at least one request to access a content item, wherein the requested content item is a spherical video that captures a 360° view of a scene that was composed stitching together a set of camera feeds that capture one or more scenes from a set of different positions;
obtaining information describing an automated viewing mode for navigating at least some of the scenes in the requested content item;
providing a viewport interface on a display screen of the computing device through
which playback of the requested content item is presented; and causing the viewport interface to automatically be navigated through at least some of the scenes during playback of the requested content item based at least in part on the automated viewing mode;
wherein the content item allows a user to access, or playback, a video to view a portion of the video,
wherein, while accessing the video, the user can zoom and change the direction by pitching, yawing or rolling of the viewport to access another portion of the scene captured in the video,
wherein a navigation indicator (602) is presented in a viewport interface when the content item is being accessed, wherein the navigation indicator (602) indicates an initial, or intended, direction (604) of the viewport while the content item is being accessed, wherein the direction (604) is specified by a publisher of the content item, and changes at different points in time during play-back of the content item, wherein the navigation indicator (602) also includes a heading indicator (606) that indicates a
direction, or heading, of the viewport while accessing the scene(s) captured by the content, wherein the direction of the viewport is indicated by the direction of the heading indicator (606),
wherein as the viewport direction changes, the heading indicator (606) rotates around a point (608) to face a direction that corresponds to the updated viewport
direction, wherein the direction indicated by the heading indicator (606) corresponds to the movement of the viewport along a vertical axis,
wherein the heading indicator (606) also indicates a zoom level of the viewport in the scene(s) being accessed,
wherein the length, or size, of the heading indicator (606) increases, or elongates,
around the point (608) to indicate a higher zoom level of the viewport, wherein the length, or size, of the heading indicator (606) decreases, or constricts, around the point (608) to indicate a reduced zoom level of the viewport,
wherein the content item is associated with a default zoom level, wherein a publisher of a content item may specify a minimum and/or maximum zoom level that is applied through the viewport, **characterized in that** the navigation indicator identifies points of interest that are within a threshold distance of the viewport location and outside of the viewport interface in a scene being presented through the viewport.

10. The system of claim 9, wherein obtaining information describing the automated viewing mode further causes the system to perform:
obtaining information describing at least one trajectory for navigating the viewport interface through at least some of the scenes during playback of the requested content item.

11. The system of claim 9 or 10, wherein obtaining information describing the at least one trajectory further causes the system to perform:
determining a category corresponding to a user operating the computing device based at least in part on one or more attributes of the user; and obtaining the at least one trajectory that is associated with the category, the trajectory having been determined to be of interest to at least some users included in the category.

12. The system of any of claims 9 to 11, wherein obtaining information describing the automated viewing mode further causes the system to perform:
obtaining information describing at least one point of interest that appears during playback of the requested content item; and
obtaining information describing at least one trajectory for navigating the viewport interface through at least some of the scenes during playback of the requested content item, wherein the trajectory includes the at least one point of interest;
optionally wherein the at least one point of interest was defined by a publisher of the requested content item.

13. A non-transitory computer-readable storage medium including instructions that, when executed by at least one processor of a computing system, cause the computing system to perform a method comprising:
determining at least one request to access a content item, wherein the requested content item is a spherical video that captures a 360° view of a scene that was composed stitching together a set of camera feeds that capture one or more scenes from a set of different positions;
obtaining information describing an automated viewing mode for navigating at least some of the scenes in the requested content item;
providing a viewport interface on a display screen of the computing device through which playback of the requested content item is presented; and causing the viewport interface to automatically be navigated through at least some of the scenes during playback of the requested content item based at least in part on the automated viewing mode;
wherein the content item allows a user to access, or playback, a video to view a portion of the video,
wherein, while accessing the video, the user can zoom and change the direction by pitching, yawing or rolling of the viewport to access another portion of the scene captured in the video,
wherein a navigation indicator (602) is presented in a viewport interface when the content item is being accessed, wherein the navigation indicator (602) indicates an initial, or intended, direction (604) of the viewport while the content item is being accessed, wherein the direction (604) is specified by a publisher of the content item, and changes at different points in time during play-back of the content item, wherein
the navigation indicator (602) also includes a heading indicator (606) that indicates a
direction, or heading, of the viewport while accessing the scene(s) captured by the content, wherein the direction of the viewport is indicated by the direction of the heading indicator (606),
wherein as the viewport direction changes, the heading indicator (606) rotates around a point (608) to face a direction that corresponds to the updated viewport direction, wherein the direction indicated by the heading indicator (606) corresponds to the movement of the viewport along a vertical axis, wherein the heading indicator (606) also indicates a zoom level of the viewport in the scene(s) being accessed,
wherein the length, or size, of the heading indicator (606) increases, or elongates, around the point (608) to indicate a higher zoom level of the viewport, wherein the length, or size, of the heading indicator (606) decreases, or constricts, around the point (608) to indicate a reduced zoom level of the viewport,
wherein the content item is associated with a default zoom level, wherein a publisher of a content item may specify a minimum and/or maximum zoom level that is applied through the viewport, **characterised in that** the navigation indicator identifies points of interest that are within a threshold distance of the viewport location and outside of the viewport interface in a scene being presented through the viewport.

14. The non-transitory computer-readable storage medium of claim 13, wherein obtaining information describing the automated viewing mode further causes the computing system to perform:
obtaining information describing at least one trajectory for navigating the viewport interface through at least some of the scenes during playback of the requested content item; and/or
wherein obtaining information describing the at least one trajectory further causes the computing system to perform:
determining a category corresponding to a user operating the computing device based at least in part on one or more attributes of the user; and obtaining the at least one trajectory that is associated with the category, the trajectory having been determined to be of interest to at least some users included in the category.

15. The non-transitory computer-readable storage medium of claim 13, wherein obtaining information describing the automated viewing mode further causes the computing system to perform:
obtaining information describing at least one point of interest that appears during playback of the requested content item; and
obtaining information describing at least one trajectory for navigating the viewport interface through at least some of the scenes during playback of the requested content item, wherein the trajectory includes the at least one point of interest; optionally wherein the at least one point of interest was defined by a publisher of the requested content item.

## Patentansprüche

1. Ein computerimplementiertes Verfahren, das Folgendes beinhaltet:
Bestimmen, durch eine Rechenvorrichtung, mindestens einer Anfrage nach Zugriff auf ein Inhaltselement,
wobei das angefragte Inhaltselement ein sphärisches Video ist, das eine 360°-Ansicht einer Szene einfängt, die zusammengestellt wurde, indem ein Satz Kamerafeeds, die eine oder mehrere Szenen aus einem Satz unterschiedlicher Positionen einfangen, kombiniert wurden;
Erhalten, durch die Rechenvorrichtung, von Informationen, die einen automatisierten Ansichtsmodus zum Navigieren mindestens einiger der Szenen in dem angefragten Inhaltselement beschreiben;
Bereitstellen, durch die Rechenvorrichtung, einer Ansichtsfensterschnittstelle auf einem Ausgabebildschirm der Rechenvorrichtung, durch den die Wiedergabe des angefragten Inhaltselements dargestellt wird; und
Bewirken, durch die Rechenvorrichtung, dass die Ansichtsfensterschnittstelle basierend mindestens teilweise auf dem automatisierten Ansichtsmodus während der Wiedergabe des angefragten Inhaltselements automatisch durch mindestens einige der Szenen navigiert wird;
wobei das Inhaltselement einem Benutzer gestattet, auf ein Video zuzugreifen oder es wiederzugeben, um einen Teil des Videos anzusehen,
wobei, während auf das Video zugegriffen wird, der Benutzer zoomen und die Richtung durch Nicken, Gieren oder Rollen des Ansichtsfensters ändern kann, um auf einen anderen Teil der Szene zuzugreifen, die in dem Video eingefangen ist,
wobei ein Navigationsanzeiger (602) in einer Ansichtsfensterschnittstelle dargestellt wird, wenn auf das Inhaltselement zugegriffen wird, wobei der Navigationsanzeiger (602) eine anfängliche oder beabsichtigte Richtung (604) des Ansichtsfensters anzeigt, während auf das Inhaltselement zugegriffen wird, wobei die Richtung (604) von einem Herausgeber des Inhaltselements spezifiziert wird und sich zu unterschiedlichen Zeitpunkten während der Wiedergabe des Inhaltselements ändert, wobei der Navigationsanzeiger (602) auch einen Kursanzeiger (606) umfasst, der eine Richtung oder einen Kurs des Ansichtsfensters anzeigt, während auf die Szene/die Szenen, die durch den Inhalt eingefangen ist/sind, zugegriffen wird, wobei die Richtung des Ansichtsfensters durch die Richtung des Kursanzeigers (606) angezeigt wird,
wobei sich der Kursanzeiger (606), wenn sich die Ansichtsfensterrichtung ändert, um einen Punkt (608) dreht, um in eine Richtung gewandt zu sein, die der aktualisierten Ansichtsfensterrichtung entspricht, wobei die Richtung, die durch den Kursanzeiger (606) angezeigt wird, der Bewegung des Ansichtsfensters entlang einer vertikalen Achse entspricht,
wobei der Kursanzeiger (606) auch einen Zoomfaktor des Ansichtsfensters in der Szene/den Szenen, auf die zugegriffen wird, anzeigt,
wobei sich die Länge oder Größe des Kursanzeigers (606) um den Punkt (608) erhöht oder verlängert, um einen höheren Zoomfaktor des Ansichtsfensters anzuzeigen, wobei sich die Länge oder Größe des Kursanzeigers (606) um den Punkt (608) verringert oder verengt, um einen reduzierten Zoomfaktor des Ansichtsfensters anzuzeigen,
wobei das Inhaltselement mit einem Standardzoomfaktor assoziiert ist, wobei ein Herausgeber eines Inhaltselements einen minimalen und/oder maximalen Zoomfaktor spezifizieren kann, der durch das Ansichtsfenster angewendet wird, **dadurch gekennzeichnet, dass** der Navigationsanzeiger Punkte von Interesse identifiziert, die innerhalb einer Schwellenwertentfernung von dem Ansichtsfensterstandort und
außerhalb der Ansichtsfensterschnittstelle in einer durch das Ansichtsfenster dargestellten Szene liegen.

2. Computerimplementiertes Verfahren gemäß Anspruch 1, wobei das Erhalten von Informationen, die den automatisierten Ansichtsmodus beschreiben, ferner Folgendes beinhaltet:
Erhalten, durch die Rechenvorrichtung, von Informationen, die mindestens eine Bahn zum Navigieren der Ansichtsfensterschnittstelle durch mindestens einige der Szenen während der Wiedergabe des angefragten Inhaltselements beschreiben.

3. Computerimplementiertes Verfahren gemäß Anspruch 1 oder 2, wobei das Erhalten von Informationen, die die mindestens eine Bahn beschreiben, ferner Folgendes beinhaltet:
Bestimmen, durch die Rechenvorrichtung, einer Kategorie, die einem Benutzer entspricht, der die Rechenvorrichtung betätigt, basierend mindestens teilweise auf einem oder mehreren Attributen des Benutzers; und
Erhalten, durch die Rechenvorrichtung, der mindestens einen Bahn, die mit der Kategorie assoziiert ist, wobei bestimmt wurde, dass die Bahn für mindestens einige Benutzer, die in der Kategorie umfasst sind, von Interesse ist.

4. Computerimplementiertes Verfahren gemäß einem der Ansprüche 1 bis 3, wobei das Erhalten von Informationen, die den automatisierten Ansichtsmodus beschreiben, ferner Folgendes beinhaltet: Erhalten, durch die Rechenvorrichtung, von Informationen, die mindestens einen Punkt von Interesse beschreiben, der während der Wiedergabe des angefragten Inhaltselements erscheint; und Erhalten, durch die Rechenvorrichtung, von Informationen, die mindestens eine Bahn zum Navigieren der Ansichtsfensterschnittstelle durch mindestens einige der Szenen während der Wiedergabe des angefragten Inhaltselements beschreiben, wobei die Bahn den mindestens einen Punkt von Interesse umfasst;
wobei der mindestens eine Punkt von Interesse optional von einem Herausgeber des angefragten Inhaltselements definiert wurde; und/oder
wobei das Erhalten von Informationen, die den mindestens einen Punkt von Interesse beschreiben, optional ferner Folgendes beinhaltet:
Bestimmen, durch die Rechenvorrichtung, einer Kategorie, die einem Benutzer entspricht, der die Rechenvorrichtung betätigt, basierend mindestens teilweise auf einem oder mehreren Attributen des Benutzers; und
Erhalten, durch die Rechenvorrichtung, des mindestens einen Punkts von Interesse, der mit der Kategorie assoziiert ist, wobei bestimmt wurde, dass der Punkt von Interesse für mindestens einige Benutzer, die in der Kategorie umfasst sind, von Interesse ist.

5. Computerimplementiertes Verfahren gemäß einem der Ansprüche 1 bis 4, wobei das Verfahren ferner Folgendes beinhaltet:
Bestimmen, durch die Rechenvorrichtung, dass ein Benutzer, der die Rechenvorrichtung betätigt, einen oder mehrere Vorgänge durchgeführt hat, um die Ansichtsfensterschnittstelle während der Wiedergabe des angefragten Inhaltselements manuell zu einem besonderen Punkt von Interesse zu navigieren;
Bestimmen, durch die Rechenvorrichtung, dass eine Operation zum Teilen des besonderen Punkts von Interesse durchgeführt wurde; und
Bewirken, durch die Rechenvorrichtung, dass Informationen, die den besonderen Punkt von Interesse beschreiben, durch ein System eines sozialen Netzwerks geteilt werden.

6. Computerimplementiertes Verfahren gemäß einem der Ansprüche 1 bis 5, wobei das Verfahren ferner Folgendes beinhaltet:
Bestimmen, durch die Rechenvorrichtung, dass ein Benutzer, der die Rechenvorrichtung betätigt, einen oder mehrere Vorgänge durchgeführt hat, um die Ansichtsfensterschnittstelle manuell zu navigieren, um während der Wiedergabe des angefragten Inhaltselements eine individuell angepasste Bahn zu erzeugen;
Bestimmen, durch die Rechenvorrichtung, dass eine Operation zum Teilen der individuell angepassten Bahn durchgeführt wurde; und
Bewirken, durch die Rechenvorrichtung, dass Informationen, die die individuell angepasste Bahn beschreiben, durch ein System eines sozialen Netzwerks geteilt werden.

7. Computerimplementiertes Verfahren gemäß einem der Ansprüche 1 bis 6, wobei das Bewirken, dass die Ansichtsfensterschnittstelle automatisch navigiert wird, ferner Folgendes beinhaltet:
Bestimmen, durch die Rechenvorrichtung, dass das angefragte Inhaltselement einen ersten Punkt von Interesse und einen zweiten Punkt von Interesse umfasst, wobei der zweite Punkt von Interesse während der Wiedergabe des angefragten Inhaltselements anschließend an den ersten Punkt von Interesse erscheint; und
Bewirken, durch die Rechenvorrichtung, dass ein Richtungsanzeiger vor dem automatischen Navigieren der Ansichtsfensterschnittstelle von dem ersten Punkt von Interesse zu dem zweiten Punkt von Interesse in der Ansichtsfensterschnittstelle ausgegeben wird, wobei der Richtungsanzeiger in eine Richtung zeigt, die dem zweiten Punkt von Interesse entspricht.

8. Computerimplementiertes Verfahren gemäß einem der Ansprüche 1 bis 7, wobei das Bewirken, dass die Ansichtsfensterschnittstelle automatisch navigiert wird, ferner Folgendes beinhaltet:
Bestimmen, durch die Rechenvorrichtung, dass das angefragte Inhaltselement einen ersten Punkt von Interesse und einen zweiten Punkt von Interesse umfasst, wobei der zweite Punkt von Interesse während der Wiedergabe des angefragten Inhaltselements anschließend an den ersten Punkt von Interesse erscheint; und Bewirken, durch die Rechenvorrichtung, dass die Ansichtsfensterschnittstelle unter Verwendung mindestens einer Filmübergangstechnik automatisch von dem ersten Punkt von Interesse zu dem zweiten Punkt von Interesse navigiert wird.

9. Ein System, das Folgendes beinhaltet:
mindestens einen Prozessor; und
einen Speicher, der Anweisungen speichert, die, wenn sie von dem mindestens einen Prozessor ausgeführt werden, bewirken, dass das System Folgendes durchführt:
Bestimmen mindestens einer Anfrage nach Zugriff auf ein Inhaltselement, wobei das angefragte Inhaltselement ein sphärisches Video ist, das eine 360°-Ansicht einer Szene einfängt, die zusammengestellt wurde, indem ein Satz Kamerafeeds, die eine oder mehrere Szenen aus einem Satz unterschiedlicher Positionen einfangen, kombiniert wurden;
Erhalten von Informationen, die einen automatisierten Ansichtsmodus zum Navigieren mindestens einiger der Szenen in dem angefragten Inhaltselement beschreiben;
Bereitstellen einer Ansichtsfensterschnittstelle auf einem Ausgabebildschirm der Rechenvorrichtung, durch den die Wiedergabe des angefragten Inhaltselements dargestellt wird; und Bewirken, dass die Ansichtsfensterschnittstelle basierend mindestens teilweise auf dem automatisierten Ansichtsmodus während der Wiedergabe des angefragten Inhaltselements automatisch durch mindestens einige der Szenen navigiert wird;
wobei das Inhaltselement einem Benutzer gestattet, auf ein Video zuzugreifen oder es wiederzugeben, um einen Teil des Videos anzusehen,
wobei, während auf das Video zugegriffen wird, der Benutzer zoomen und die Richtung durch Nicken, Gieren oder Rollen des Ansichtsfensters ändern kann, um auf einen anderen Teil der Szene zuzugreifen, die in dem Video eingefangen ist,
wobei ein Navigationsanzeiger (602) in einer Ansichtsfensterschnittstelle dargestellt wird, wenn auf das Inhaltselement zugegriffen wird, wobei der Navigationsanzeiger (602) eine anfängliche oder beabsichtigte Richtung (604) des Ansichtsfensters anzeigt, während auf das Inhaltselement zugegriffen wird, wobei die Richtung (604) von einem Herausgeber des Inhaltselements spezifiziert wird und sich zu unterschiedlichen Zeitpunkten während der Wiedergabe des Inhaltselements ändert, wobei der Navigationsanzeiger (602) auch einen Kursanzeiger (606) umfasst, der eine Richtung oder einen Kurs des Ansichtsfensters anzeigt, während auf die Szene/die Szenen, die durch den Inhalt eingefangen ist/sind, zugegriffen wird, wobei die Richtung des Ansichtsfensters durch die Richtung des Kursanzeigers (606) angezeigt wird,
wobei sich der Kursanzeiger (606), wenn sich die Ansichtsfensterrichtung ändert, um einen Punkt (608) dreht, um in eine Richtung gewandt zu sein, die der aktualisierten Ansichtsfensterrichtung entspricht, wobei die Richtung, die durch den Kursanzeiger (606) angezeigt wird, der Bewegung des Ansichtsfensters entlang einer vertikalen Achse entspricht,
wobei der Kursanzeiger (606) auch einen Zoomfaktor des Ansichtsfensters in der Szene/den Szenen, auf die zugegriffen wird, anzeigt,
wobei sich die Länge oder Größe des Kursanzeigers (606) um den Punkt (608) erhöht oder verlängert, um einen höheren Zoomfaktor des Ansichtsfensters anzuzeigen, wobei sich die Länge oder Größe des Kursanzeigers (606) um den Punkt (608) verringert oder verengt, um einen reduzierten Zoomfaktor des Ansichtsfensters anzuzeigen,
wobei das Inhaltselement mit einem Standardzoomfaktor assoziiert ist, wobei ein Herausgeber eines Inhaltselements einen minimalen und/oder maximalen Zoomfaktor spezifizieren kann, der durch das Ansichtsfenster angewendet wird, **dadurch gekennzeichnet, dass** der Navigationsanzeiger Punkte von Interesse identifiziert, die innerhalb einer Schwellenwertentfernung von dem Ansichtsfensterstandort und
außerhalb der Ansichtsfensterschnittstelle in einer durch das Ansichtsfenster dargestellten Szene liegen.

10. System gemäß Anspruch 9, wobei das Erhalten von Informationen, die den automatisierten Ansichtsmodus beschreiben, ferner bewirkt, dass das System Folgendes durchführt:
Erhalten von Informationen, die mindestens eine Bahn zum Navigieren der Ansichtsfensterschnittstelle durch mindestens einige der Szenen während der Wiedergabe des angefragten Inhaltselements beschreiben.

11. System gemäß Anspruch 9 oder 10, wobei das Erhalten von Informationen, die die mindestens eine Bahn beschreiben, ferner bewirkt, dass das System Folgendes durchführt:
Bestimmen einer Kategorie, die einem Benutzer entspricht, der die Rechenvorrichtung betätigt, basierend mindestens teilweise auf einem oder mehreren Attributen des Benutzers; und Erhalten der mindestens einen Bahn, die mit der Kategorie assoziiert ist, wobei bestimmt wurde, dass die Bahn für mindestens einige Benutzer, die in der Kategorie umfasst sind, von Interesse ist.

12. System gemäß einem der Ansprüche 9 bis 11, wobei das Erhalten von Informationen, die den automatisierten Ansichtsmodus beschreiben, ferner bewirkt, dass das System Folgendes durchführt:
Erhalten von Informationen, die mindestens einen Punkt von Interesse beschreiben, der während der Wiedergabe des angefragten Inhaltselements erscheint; und
Erhalten von Informationen, die mindestens eine Bahn zum Navigieren der Ansichtsfensterschnittstelle durch mindestens einige der Szenen während der Wiedergabe des angefragten Inhaltselements beschreiben, wobei die Bahn den mindestens einen Punkt von Interesse umfasst;
wobei der mindestens eine Punkt von Interesse optional von einem Herausgeber des angefragten Inhaltselements definiert wurde.

13. Ein nicht transitorisches, computerlesbares Speichermedium, das Anweisungen umfasst, die, wenn sie von mindestens einem Prozessor eines Rechensystems ausgeführt werden, bewirken, dass das Rechensystem ein Verfahren durchführt, das Folgendes beinhaltet:
Bestimmen mindestens einer Anfrage nach Zugriff auf ein Inhaltselement, wobei das angefragte Inhaltselement ein sphärisches Video ist, das eine 360°-Ansicht einer Szene einfängt, die zusammengestellt wurde, indem ein Satz Kamerafeeds, die eine oder mehrere Szenen aus einem Satz unterschiedlicher Positionen einfangen, kombiniert wurden;
Erhalten von Informationen, die einen automatisierten Ansichtsmodus zum Navigieren mindestens einiger der Szenen in dem angefragten Inhaltselement beschreiben;
Bereitstellen einer Ansichtsfensterschnittstelle auf einem Ausgabebildschirm der Rechenvorrichtung, durch den die Wiedergabe des angefragten Inhaltselements dargestellt wird; und Bewirken, dass die Ansichtsfensterschnittstelle basierend mindestens teilweise auf dem automatisierten Ansichtsmodus während der Wiedergabe des angefragten Inhaltselements automatisch durch mindestens einige der Szenen navigiert wird;
wobei das Inhaltselement einem Benutzer gestattet, auf ein Video zuzugreifen oder es wiederzugeben, um einen Teil des Videos anzusehen,
wobei, während auf das Video zugegriffen wird, der Benutzer zoomen und die Richtung durch Nicken, Gieren oder Rollen des Ansichtsfensters ändern kann, um auf einen anderen Teil der Szene zuzugreifen, die in dem Video eingefangen ist,
wobei ein Navigationsanzeiger (602) in einer Ansichtsfensterschnittstelle dargestellt wird, wenn auf das Inhaltselement zugegriffen wird, wobei der Navigationsanzeiger (602) eine anfängliche oder beabsichtigte Richtung (604) des Ansichtsfensters anzeigt, während auf das Inhaltselement zugegriffen wird, wobei die Richtung (604) von einem Herausgeber des Inhaltselements spezifiziert wird und sich zu unterschiedlichen Zeitpunkten während der Wiedergabe des Inhaltselements ändert, wobei der Navigationsanzeiger (602) auch einen Kursanzeiger (606) umfasst, der eine Richtung oder einen Kurs des Ansichtsfensters anzeigt, während auf die Szene/die Szenen, die durch den Inhalt eingefangen ist/sind, zugegriffen wird, wobei die Richtung des Ansichtsfensters durch die Richtung des Kursanzeigers (606) angezeigt wird,
wobei sich der Kursanzeiger (606), wenn sich die Ansichtsfensterrichtung ändert, um einen Punkt (608) dreht, um in eine Richtung gewandt zu sein, die der aktualisierten Ansichtsfensterrichtung entspricht, wobei die Richtung, die durch den Kursanzeiger (606) angezeigt wird, der Bewegung des Ansichtsfensters entlang einer vertikalen Achse entspricht,
wobei der Kursanzeiger (606) auch einen Zoomfaktor des Ansichtsfensters in der Szene/den Szenen, auf die zugegriffen wird, anzeigt,
wobei sich die Länge oder Größe des Kursanzeigers (606) um den Punkt (608) erhöht oder verlängert, um einen höheren Zoomfaktor des Ansichtsfensters anzuzeigen, wobei sich die Länge oder Größe des Kursanzeigers (606) um den Punkt (608) verringert oder verengt, um einen reduzierten Zoomfaktor des Ansichtsfensters anzuzeigen,
wobei das Inhaltselement mit einem Standardzoomfaktor assoziiert ist, wobei ein Herausgeber eines Inhaltselements einen minimalen und/oder maximalen Zoomfaktor spezifizieren kann, der durch das Ansichtsfenster angewendet wird, **dadurch gekennzeichnet, dass** der Navigationsanzeiger Punkte von Interesse identifiziert, die innerhalb einer Schwellenwertentfernung von dem Ansichtsfensterstandort und außerhalb der Ansichtsfensterschnittstelle in einer durch das Ansichtsfenster dargestellten Szene liegen.

14. Nicht transitorisches, computerlesbares Speichermedium gemäß Anspruch 13, wobei das Erhalten von Informationen, die den automatisierten Ansichtsmodus beschreiben, ferner bewirkt, dass das Rechensystem Folgendes durchführt:
Erhalten von Informationen, die mindestens eine Bahn zum Navigieren der Ansichtsfensterschnittstelle durch mindestens einige der Szenen während der Wiedergabe des angefragten Inhaltselements beschreiben; und/oder wobei das Erhalten von Informationen, die die mindestens eine Bahn beschreiben,
ferner bewirkt, dass das Rechensystem Folgendes durchführt:
Bestimmen einer Kategorie, die einem Benutzer entspricht, der die Rechenvorrichtung betätigt, basierend mindestens teilweise auf einem oder mehreren Attributen des Benutzers; und Erhalten der mindestens einen Bahn, die mit der Kategorie assoziiert ist, wobei bestimmt wurde, dass die Bahn für mindestens einige Benutzer, die in der Kategorie umfasst sind, von Interesse ist.

15. Nicht transitorisches, computerlesbares Speichermedium gemäß Anspruch 13, wobei das Erhalten von Informationen, die den automatisierten Ansichtsmodus beschreiben, ferner bewirkt, dass das Rechensystem Folgendes durchführt:
Erhalten von Informationen, die mindestens einen Punkt von Interesse beschreiben, der während der Wiedergabe des angefragten Inhaltselements erscheint; und
Erhalten von Informationen, die mindestens eine Bahn zum Navigieren der Ansichtsfensterschnittstelle durch mindestens einige der Szenen während der Wiedergabe des angefragten Inhaltselements beschreiben, wobei die Bahn den mindestens einen Punkt von Interesse umfasst;
wobei der mindestens eine Punkt von Interesse optional von einem Herausgeber des angefragten Inhaltselements definiert wurde.

## Revendications

1. Un procédé mis en œuvre par ordinateur comprenant le fait :
de déterminer, par un dispositif informatique, au moins une demande d'accès à un élément de contenu,
où l'élément de contenu demandé est une vidéo sphérique qui capture une vue à 360° d'une scène qui a été composée en assemblant les uns aux autres un ensemble de flux de caméra qui capturent une ou plusieurs scènes depuis un ensemble de positions différentes ;
d'obtenir, par le dispositif informatique, des informations décrivant un mode de visualisation automatisé pour la navigation dans au moins certaines des scènes dans l'élément de contenu demandé ;
de fournir, par le dispositif informatique, une interface clôture sur un écran d'affichage du dispositif informatique à travers laquelle une lecture de l'élément de contenu demandé est présentée ; et
d'amener, par le dispositif informatique, l'interface clôture à automatiquement naviguer à travers au moins certaines des scènes au cours d'une lecture de l'élément de contenu demandé sur la base au moins en partie du mode de visualisation automatisé ;
où l'élément de contenu permet à un utilisateur d'accéder à, ou de lire, une vidéo pour visualiser une portion de la vidéo,
où, pendant l'accès à la vidéo, l'utilisateur peut zoomer et changer la direction en soumettant la clôture à un mouvement de tangage, de lacet ou de roulis afin d'accéder à une autre portion de la scène capturée dans la vidéo,
où un indicateur de navigation (602) est présenté dans une interface clôture lors de l'accès à l'élément de contenu, où l'indicateur de navigation (602) indique une direction (604) initiale, ou voulue, de la clôture pendant l'accès à l'élément de contenu, où la direction (604) est spécifiée par un éditeur de l'élément de contenu, et change à différents points dans le temps au cours d'une lecture de l'élément de contenu, où l'indicateur de navigation (602) inclut aussi un indicateur de cap (606) qui indique une direction, ou un cap, de la clôture pendant l'accès à la ou aux scènes capturées par le contenu, où la direction de la clôture est indiquée par la direction de l'indicateur de cap (606),
où, à mesure que la direction de clôture change, l'indicateur de cap (606) tourne autour d'un point (608) afin d'être orienté dans une direction qui correspond à la direction de clôture mise à jour, où la direction indiquée par l'indicateur de cap (606) correspond au mouvement de la clôture le long d'un axe vertical,
où l'indicateur de cap (606) indique aussi un niveau de zoom de la clôture dans la ou les scènes auxquelles il est accédé,
où la longueur, ou taille, de l'indicateur de cap (606) augmente, ou s'allonge, autour du point (608) afin d'indiquer un niveau de zoom plus élevé de la clôture, où la longueur, ou taille, de l'indicateur de cap (606) diminue, ou rétrécit, autour du point (608) afin d'indiquer un niveau de zoom réduit de la clôture,
où l'élément de contenu est associé à un niveau de zoom par défaut, où un éditeur d'un élément de contenu peut spécifier un niveau de zoom minimum et/ou maximum qui est appliqué à travers la clôture, **caractérisé en ce que** l'indicateur de navigation identifie des points d'intérêt qui se situent à l'intérieur d'une distance seuil de l'emplacement de clôture et à l'extérieur de l'interface clôture dans une scène qui est présentée à travers la clôture.

2. Le procédé mis en œuvre par ordinateur de la revendication 1, où le fait d'obtenir des informations décrivant le mode de visualisation automatisé comprend de plus le fait :
d'obtenir, par le dispositif informatique, des informations décrivant au moins une trajectoire pour la navigation de l'interface clôture à travers au moins certaines des scènes au cours d'une lecture de l'élément de contenu demandé.

3. Le procédé mis en œuvre par ordinateur de la revendication 1 ou de la revendication 2, où le fait d'obtenir des informations décrivant l'au moins une trajectoire comprend de plus le fait :
de déterminer, par le dispositif informatique, une catégorie correspondant à un utilisateur aux commandes du dispositif informatique sur la base au moins en partie d'un ou de plusieurs attributs de l'utilisateur ; et
d'obtenir, par le dispositif informatique, l'au moins une trajectoire qui est associée à la catégorie, la trajectoire ayant été déterminée comme présentant un intérêt pour au moins certains utilisateurs inclus dans la catégorie.

4. Le procédé mis en œuvre par ordinateur de n'importe lesquelles des revendications 1 à 3, où le fait d'obtenir des informations décrivant le mode de visualisation automatisé comprend de plus le fait : d'obtenir, par le dispositif informatique, des informations décrivant au moins un point d'intérêt qui apparait au cours d'une lecture de l'élément de contenu demandé ; et d'obtenir, par le dispositif informatique, des informations décrivant au moins une trajectoire pour la navigation de l'interface clôture à travers au moins certaines des scènes au cours d'une lecture de l'élément de contenu demandé, où la trajectoire inclut l'au moins un point d'intérêt ;
facultativement où l'au moins un point d'intérêt a été défini par un éditeur de l'élément de contenu demandé ; et/ou
facultativement où le fait d'obtenir des informations décrivant l'au moins un point d'intérêt comprend de plus le fait :
de déterminer, par le dispositif informatique, une catégorie correspondant à un utilisateur aux commandes du dispositif informatique sur la base au moins en partie d'un ou de plusieurs attributs de l'utilisateur ; et
d'obtenir, par le dispositif informatique, l'au moins un point d'intérêt qui est associé à la catégorie, le point d'intérêt ayant été déterminé comme présentant un intérêt pour au moins certains utilisateurs inclus dans la catégorie.

5. Le procédé mis en œuvre par ordinateur de n'importe lesquelles des revendications 1 à 4, le procédé comprenant de plus le fait :
de déterminer, par le dispositif informatique, qu'un utilisateur aux commandes du dispositif informatique a réalisé une ou plusieurs actions pour faire naviguer manuellement l'interface clôture jusqu'à un point d'intérêt particulier au cours d'une lecture de l'élément de contenu demandé ;
de déterminer, par le dispositif informatique, qu'une opération de partage du point d'intérêt particulier a été réalisée ; et
d'amener, par le dispositif informatique, des informations décrivant le point d'intérêt particulier à être partagées à travers un système de réseautage social.

6. Le procédé mis en œuvre par ordinateur de n'importe lesquelles des revendications 1 à 5, le procédé comprenant de plus le fait :
de déterminer, par le dispositif informatique, qu'un utilisateur aux commandes du dispositif informatique a réalisé une ou plusieurs actions pour faire naviguer manuellement l'interface clôture afin de créer une trajectoire personnalisée au cours d'une lecture de l'élément de contenu demandé ;
de déterminer, par le dispositif informatique, qu'une opération de partage de la trajectoire personnalisée a été réalisée ; et
d'amener, par le dispositif informatique, des informations décrivant la trajectoire personnalisée à être partagées à travers un système de réseautage social.

7. Le procédé mis en œuvre par ordinateur de n'importe lesquelles des revendications 1 à 6, où le fait d'amener l'interface clôture à automatiquement naviguer comprend de plus le fait :
de déterminer, par le dispositif informatique, que l'élément de contenu demandé inclut un premier point d'intérêt et un deuxième point d'intérêt, où le deuxième point d'intérêt apparait à la suite du premier point d'intérêt au cours d'une lecture de l'élément de contenu demandé ; et
d'amener, par le dispositif informatique, un indicateur directionnel à être affiché dans l'interface clôture préalablement à la navigation automatique de l'interface clôture du premier point d'intérêt au deuxième point d'intérêt, l'indicateur directionnel étant pointé dans une direction qui correspond au deuxième point d'intérêt.

8. Le procédé mis en œuvre par ordinateur de n'importe lesquelles des revendications 1 à 7, où le fait d'amener l'interface clôture à automatiquement naviguer comprend de plus le fait :
de déterminer, par le dispositif informatique, que l'élément de contenu demandé inclut un premier point d'intérêt et un deuxième point d'intérêt, où le deuxième point d'intérêt apparait à la suite du premier point d'intérêt au cours d'une lecture de l'élément de contenu demandé ; et d'amener, par le dispositif informatique, l'interface clôture à naviguer automatiquement du premier point d'intérêt au deuxième point d'intérêt en utilisant au moins une technique de transition de film.

9. Un système comprenant :
au moins un processeur ; et
une mémoire stockant des instructions qui, lorsqu'elles sont exécutées par l'au moins un processeur, amènent le système à réaliser le fait :
de déterminer au moins une demande d'accès à un élément de contenu, où l'élément de contenu demandé est une vidéo sphérique qui capture une vue à 360° d'une scène qui a été composée en assemblant les uns aux autres un ensemble de flux de caméra qui capturent une ou plusieurs scènes depuis un ensemble de positions différentes ;
d'obtenir des informations décrivant un mode de visualisation automatisé pour la navigation dans au moins certaines des scènes dans l'élément de contenu demandé ; de fournir une interface clôture sur un écran d'affichage du dispositif informatique à travers laquelle une lecture de l'élément de contenu demandé est présentée ; et
d'amener l'interface clôture à automatiquement naviguer à travers au moins certaines des scènes au cours d'une lecture de l'élément de contenu demandé sur la base au moins en partie du mode de visualisation automatisé ;
où l'élément de contenu permet à un utilisateur d'accéder à, ou de lire, une vidéo pour visualiser une portion de la vidéo,
où, pendant l'accès à la vidéo, l'utilisateur peut zoomer et changer la direction en soumettant la clôture à un mouvement de tangage, de lacet ou de roulis afin d'accéder à une autre portion de la scène capturée dans la vidéo,
où un indicateur de navigation (602) est présenté dans une interface clôture lors de l'accès à l'élément de contenu, où l'indicateur de navigation (602) indique une direction (604) initiale, ou voulue, de la clôture pendant l'accès à l'élément de contenu, où la direction (604) est spécifiée par un éditeur de l'élément de contenu, et change à différents points dans le temps au cours d'une lecture de l'élément de contenu, où l'indicateur de navigation (602) inclut aussi un indicateur de cap (606) qui indique une direction, ou un cap, de la clôture pendant l'accès à la ou aux scènes capturées par le contenu, où la direction de la clôture est indiquée par la direction de l'indicateur de cap (606),
où, à mesure que la direction de clôture change, l'indicateur de cap (606) tourne autour d'un point (608) afin d'être orienté dans une direction qui correspond à la direction de clôture mise à jour, où la direction indiquée par l'indicateur de cap (606) correspond au mouvement de la clôture le long d'un axe vertical,
où l'indicateur de cap (606) indique aussi un niveau de zoom de la clôture dans la ou les scènes auxquelles il est accédé,
où la longueur, ou taille, de l'indicateur de cap (606) augmente, ou s'allonge, autour du point (608) afin d'indiquer un niveau de zoom plus élevé de la clôture, où la longueur, ou taille, de l'indicateur de cap (606) diminue, ou rétrécit, autour du point (608) afin d'indiquer un niveau de zoom réduit de la clôture,
où l'élément de contenu est associé à un niveau de zoom par défaut, où un éditeur d'un élément de contenu peut spécifier un niveau de zoom minimum et/ou maximum qui est appliqué à travers la clôture, **caractérisé en ce que** l'indicateur de navigation identifie des points d'intérêt qui se situent à l'intérieur d'une distance seuil de l'emplacement de clôture et à l'extérieur de l'interface clôture dans une scène qui est présentée à travers la clôture.

10. Le système de la revendication 9, où le fait d'obtenir des informations décrivant le mode de visualisation automatisé amène de plus le système à réaliser le fait :
d'obtenir des informations décrivant au moins une trajectoire pour la navigation de l'interface clôture à travers au moins certaines des scènes au cours d'une lecture de l'élément de contenu demandé.

11. Le système de la revendication 9 ou de la revendication 10, où le fait d'obtenir des informations décrivant l'au moins une trajectoire amène de plus le système à réaliser le fait :
de déterminer une catégorie correspondant à un utilisateur aux commandes du dispositif informatique sur la base au moins en partie d'un ou de plusieurs attributs de l'utilisateur ; et d'obtenir l'au moins une trajectoire qui est associée à la catégorie, la trajectoire ayant été déterminée comme présentant un intérêt pour certains utilisateurs au moins inclus dans la catégorie.

12. Le système de n'importe lesquelles des revendications 9 à 11, où le fait d'obtenir des informations décrivant le mode de visualisation automatisé amène de plus le système à réaliser le fait :
d'obtenir des informations décrivant au moins un point d'intérêt qui apparait au cours d'une lecture de l'élément de contenu demandé ; et
d'obtenir des informations décrivant au moins une trajectoire pour la navigation de l'interface clôture à travers au moins certaines des scènes au cours d'une lecture de l'élément de contenu demandé, où la trajectoire inclut l'au moins un point d'intérêt ;
facultativement où l'au moins un point d'intérêt a été défini par un éditeur de l'élément de contenu demandé.

13. Un support de stockage lisible par ordinateur non transitoire incluant des instructions qui, lorsqu'elles sont exécutées par au moins un processeur d'un système informatique, amènent le système informatique à réaliser un procédé comprenant le fait :
de déterminer au moins une demande d'accès à un élément de contenu, où l'élément de contenu demandé est une vidéo sphérique qui capture une vue à 360° d'une scène qui a été composée en assemblant les uns aux autres un ensemble de flux de caméra qui capturent une ou plusieurs scènes depuis un ensemble de positions différentes ;
d'obtenir des informations décrivant un mode de visualisation automatisé pour la navigation dans au moins certaines des scènes dans l'élément de contenu demandé ; de fournir une interface clôture sur un écran d'affichage du dispositif informatique à travers laquelle une lecture de l'élément de contenu demandé est présentée ; et
d'amener l'interface clôture à automatiquement naviguer à travers au moins certaines des scènes au cours d'une lecture de l'élément de contenu demandé sur la base au moins en partie du mode de visualisation automatisé ;
où l'élément de contenu permet à un utilisateur d'accéder à, ou de lire, une vidéo pour visualiser une portion de la vidéo,
où, pendant l'accès à la vidéo, l'utilisateur peut zoomer et changer la direction en soumettant la clôture à un mouvement de tangage, de lacet ou de roulis afin d'accéder à une autre portion de la scène capturée dans la vidéo,
où un indicateur de navigation (602) est présenté dans une interface clôture lors de l'accès à l'élément de contenu, où l'indicateur de navigation (602) indique une direction (604) initiale, ou voulue, de la clôture pendant l'accès à l'élément de contenu, où la direction (604) est spécifiée par un éditeur de l'élément de contenu, et change à différents points dans le temps au cours d'une lecture de l'élément de contenu, où l'indicateur de navigation (602) inclut aussi un indicateur de cap (606) qui indique une direction, ou un cap, de la clôture pendant l'accès à la ou aux scènes capturées par le contenu, où la direction de la clôture est indiquée par la direction de l'indicateur de cap (606),
où à mesure que la direction de clôture change, l'indicateur de cap (606) tourne autour d'un point (608) afin d'être orienté dans une direction qui correspond à la direction de clôture mise à jour, où la direction indiquée par l'indicateur de cap (606) correspond au mouvement de la clôture le long d'un axe vertical,
où l'indicateur de cap (606) indique aussi un niveau de zoom de la clôture dans la ou les scènes auxquelles il est accédé,
où la longueur, ou taille, de l'indicateur de cap (606) augmente, ou s'allonge, autour du point (608) afin d'indiquer un niveau de zoom plus élevé de la clôture, où la longueur,
ou taille, de l'indicateur de cap (606) diminue, ou rétrécit, autour du point (608) afin d'indiquer un niveau de zoom réduit de la clôture,
où l'élément de contenu est associé à un niveau de zoom par défaut, où un éditeur d'un élément de contenu peut spécifier un niveau de zoom minimum et/ou maximum qui est appliqué à travers la clôture, **caractérisé en ce que** l'indicateur de navigation identifie des points d'intérêt qui se situent à l'intérieur d'une distance seuil de l'emplacement de clôture et à l'extérieur de l'interface clôture dans une scène qui est présentée à travers la clôture.

14. Le support de stockage lisible par ordinateur non transitoire de la revendication 13, où le fait d'obtenir des informations décrivant le mode de visualisation automatisé amène de plus le système informatique à réaliser le fait :
d'obtenir des informations décrivant au moins une trajectoire pour la navigation de l'interface clôture à travers au moins certaines des scènes au cours d'une lecture de l'élément de contenu demandé ; et/ou
où le fait d'obtenir des informations décrivant l'au moins une trajectoire amène de plus le système informatique à réaliser le fait :
de déterminer une catégorie correspondant à un utilisateur aux commandes du dispositif informatique sur la base au moins en partie d'un ou de plusieurs attributs de l'utilisateur ; et d'obtenir l'au moins une trajectoire qui est associée à la catégorie, la trajectoire ayant été déterminée comme présentant un intérêt pour au moins certains utilisateurs inclus dans la catégorie.

15. Le support de stockage lisible par ordinateur non transitoire de la revendication 13, où le fait d'obtenir des informations décrivant le mode de visualisation automatisé amène de plus le système informatique à réaliser le fait :
d'obtenir des informations décrivant au moins un point d'intérêt qui apparait au cours d'une lecture de l'élément de contenu demandé ; et
d'obtenir des informations décrivant au moins une trajectoire pour la navigation de l'interface clôture à travers au moins certaines des scènes au cours d'une lecture de l'élément de contenu demandé, où la trajectoire inclut l'au moins un point d'intérêt ;
facultativement où l'au moins un point d'intérêt a été défini par un éditeur de l'élément de contenu demandé.
